# EUROPEAN PATENT APPLICATION

(11) **EP 4 745 169 A1**
(43) Date of publication of application: **20.05.2026**
(21) Application number: 24213025.0
(22) Date of filing: 14.11.2024
(51) Int. Cl.: C08G 18/10, C08G 18/28, C08G 18/32, C08G 18/48, C08G 18/67, C08G 18/73, C08G 18/75, C08G 18/78, C08G 18/80, C08G 18/81, C08G 71/04, C09D 175/04, C09J 175/04

(54) **COMPOSITION USEFUL AS COATING, SEALANT OR ADHESIVE**

(71) Applicant: BASF SE, 67056 Ludwigshafen am Rhein (DE); Albert-Ludwigs-Universität Freiburg, 79098 Freiburg (DE)
(72) Inventor: RUDOLF, Peter, 67056 Ludwigshafen am Rhein (DE); FUKUZUMI, Takeo, 67056 Ludwigshafen am Rhein (DE); MERKENS, Kay, 41199 Moenchengladbach (DE); RUEHE, Juergen, 79110 Freiburg (DE); KONRADI, Rupert, 67056 Ludwigshafen am Rhein (DE)
(74) Representative: Meissner Bolte Partnerschaft mbB

(57) **Abstract**

A composition useful as coating, sealant or adhesive comprises a)-(I'), a)-(I) + b), a)-(I') + b) or a)-(I) + a)-(I') + b), wherein a)-(I), a)-(I') and b) are as follows
a) 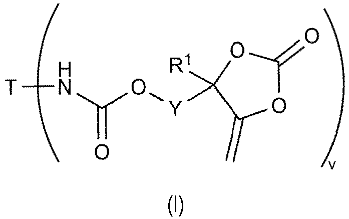 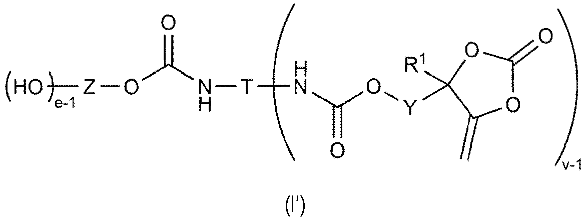 wherein R¹ is H or methyl, Y is an organic spacer moiety, T is a v functional organic residue, v is from 1.5 to 50, Z is an e functional residue of a polyol, and b) a compound having at least two nucleophilic groups and/or groups being capable of releasing a nucleophilic group, the nucleophilic group being selected from hydroxyl groups, primary amino groups, secondary amino groups, and thiol groups. The polymers resulting from the composition incorporate urethane bonds and bonds formed by the reaction of the exo-vinylene carbonate group with a nucleophile.

## Description

The present invention relates to a composition useful as coating, sealant or adhesive, a one-part or multiple-part composition, a method for bonding a first substrate and at least one further substrate, a method for providing a sealing joint, and a method for coating a surface of a substrate.

Polyurethanes are versatile materials and have been used in a wide variety of applications such as foam insulation, car seats, adhesives, tubing and cabling elastomers, paint coatings and abrasion resistant coatings. Polyurethanes may be used in protective coatings (e.g. to wood, metal, plastic), adhesives to rigid substrates (e.g. composites, metal), adhesives to flexible substrates (textile, plastic film), in applications that require moisture-resistance (e.g. in outdoor use, in sealing, in electronics), and in tough and wear-resistant elastomers.

Conventionally, polyurethanes are manufactured by the reaction of polyols with isocyanates, preferably in the presence of a catalyst. Such isocyanates, in particular readily volatile and/or migrating monomeric diisocyanates, are considered toxic. Materials that are, or are suspected to be, ecologically damaging are increasingly unacceptable and alternative ecologically safer solutions are demanded. Furthermore, isocyanates are highly reactive and prone to an undesirable side-reaction between the isocyanate groups with or without moisture. Reaction with moisture yields carbon dioxide within the polyurethane mass, resulting in bubbles of carbon dioxide being trapped in the finished material, causing the polyurethane to be porous. Moreover, the curing reaction is typically catalyzed by a polyaddition catalyst such as a tin catalyst. Due to their high toxicity, the exposure of end-users to such tin catalysts is undesirable.

One alternative to isocyanate-based polyurethanes is provided by the isocyanate-free polyurethanes, often abbreviated as NIPU (non isocyanate polyurethane). Such isocyanate-free polyurethanes are produced without the use of toxic isocyanates. A known method is, for example, the production of isocyanate-free polyurethanes from dicarbonates having cyclic carbonate groups and diamines by ring opening reaction addition. However, this reaction is associated with some drawbacks. The curing does not proceed at ambient conditions and the ring opening is non-selective. Neither primary amines, secondary amines nor alcohols as crosslinkers will inevitably result in the formation of urethane bonds. If urethane groups are formed, the reaction results in polymers that contain hydroxyl groups in the β-position to the urethane group and which have increased hydrophilicity.

Exo-vinylene carbonates can overcome these drawbacks by showing much higher reactivity and selectivity while avoiding the formation of hydroxyl groups.

US 2016/186008 A1 discloses a coating composition. The composition comprises a carbonate compound comprising at least two cyclic carbonate groups and a siloxane group, of formula I

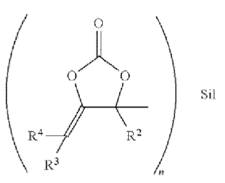

The composition is reacted with polyols or polyamines and applied to glass.

WO 2018/054609 A1 discloses a two-component sealant and/or adhesive composition comprising i) in a first component, a compound having two or more exo-vinylene cyclic carbonate units, wherein said exo-vinylene cyclic carbonate units are bonded to one another by means of at least one organic, siloxane-free linking group, wherein said linking group is not directly bonded to the exo-vinylene double bonds and wherein the compound has at least one acetal group in the linking group in the case that the compound has exactly two exo-vinylene cyclic carbonate units, and, ii) in a second component, a multifunctional hardener that has at least two functional groups selected from primary amino groups, secondary amino groups, hydroxy groups, phosphine groups, phosphonate groups, and mercaptan groups. The compound of the first component i) can be of the following formula:

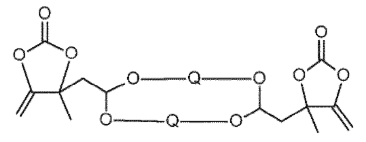

US 2018/0072842 A1 discloses a hydrocarbon-based polymer comprising two exo-vinylene cyclocarbonate end groups. The two exo-vinylene cyclocarbonate end groups are connected via a linker which is attached to the two exo-vinylene cyclocarbonate end groups via the exo-vinylene moieties. The hydrocarbon-based polymers such as 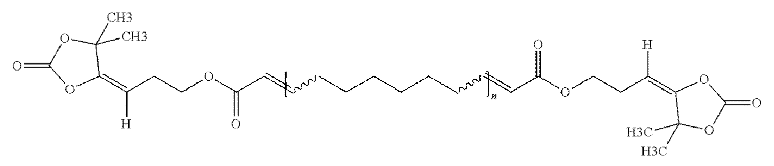 are reacted with, e.g., diamines to give a polyurethane. The polyurethanes are intended to be used as coating or adhesive compositions.

US 2016/215162 A1 discloses a nonaqueous coating material composition comprising: (A) an oligomeric and/or polymeric compound having at least two hydroxyl groups (polyol); (B) an oligomeric and/or polymeric compound having at least two alkylidene-1,3-dioxolan-2-one groups of formula 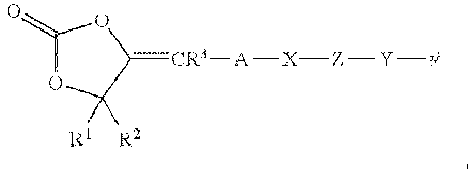 wherein # represents an attachment to a polymer backbone; and (D) a catalyst for crosslinking. In compound (B), substitution to the polymer backbone occurs via the exo-vinylene moiety.

The reaction of nucleophiles with exo-vinylene carbonates does not, or at least does not necessarily, result in the formation of urethane bonds. The reaction of secondary amines yields carbamates while primary amines can show more complex reaction behavior, mainly depending on the polarity of the matrix, temperature and the substitution pattern of the 5-membered ring. This means that neither primary amines, secondary amines nor alcohols as crosslinkers will inevitably result in the formation of urethane bonds. Hence, the resulting polymers lack hydrogen bond forming character which is a crucial element for the performance of "classic polyurethane chemistry".

It is an object of the invention that the precursors overcome the above shortcomings.

This object is solved by the inventive composition useful as coating, sealant or adhesive, comprising a compound containing both one or more urethane group(s) and one or more exo-vinylene carbonate groups (hereinafter also referred to as "exo-VC") and a compound having at least two nucleophilic groups and/or groups being capable of releasing a nucleophilic group, the nucleophilic group being selected from hydroxyl groups, primary amino groups, secondary amino groups, and thiol groups.

The invention provides a composition useful as coating, sealant or adhesive, comprising a)-(I'), a)-(I) + b), a)-(I') + b) or a)-(I) + a)-(I') + b), wherein a)-(I), a)-(I') and b) are as follows
a) 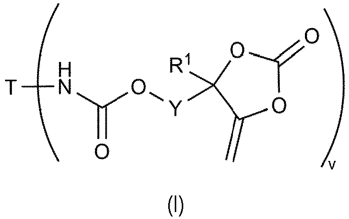 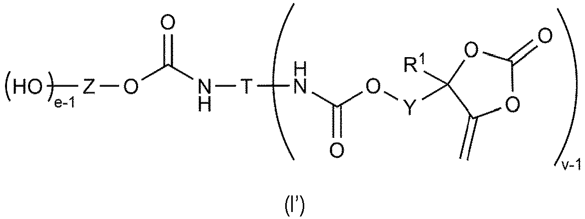 wherein
   R¹ is H or methyl,
   Y is an organic spacer moiety,
   T is a v functional organic residue,
   v is from 1.5 to 50, preferably 2 to 50
   Z is an e functional residue of a polyol,
b) a compound having at least two nucleophilic groups and/or groups being capable of releasing a nucleophilic group, the nucleophilic group being selected from hydroxyl groups, primary amino groups, secondary amino groups, and thiol groups.

All definitions regarding T, Y, R¹ that follow with regard to the compound of formula (I) analogously apply for the compound of formula (I').

The polymers resulting from the inventive composition incorporate urethane bonds and bonds formed by the reaction of the exo-VC group with a nucleophile. Hence, depending on the nature of the nucleophile and the reaction conditions, the polymers can be polyurethane polymers or are mixed backbone polymers, which means that they incorporate more than one backbone bond type.

Depending on the substitution pattern, the compound of formula (I) can have one or more stereogenic centers. Herein, formula (I) is intended to denote all stereoisomers of the compound of formula (I).

Generally, in the compound of formula (I) above, Y is an organic spacer moiety. Suitably, the organic spacer moiety links the oxygen atom adjacent to Y, and the carbon atom in 5-position of the 4-methylene-1,3-dioxolan-2-one group adjacent to Y via a chain of successive atoms, preferably a chain of successive carbon atoms. Preferably, the chain has 3 to 12 carbon atoms, in particular 4 to 9 carbon atoms. The chain is optionally substituted with 1 to 5 identical or different substituents, independently of one another selected from C₁-C₄ alkyl, cycloalkyl and phenyl-C₁-C₄-alkyl.

In the compound of formula (I) above, Y may be 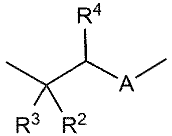 wherein
R² and R³ are independently selected from H, C₁-C₄ alkyl, cycloalkyl and phenyl-C₁-C₄-alkyl, or R² and R³, together with the carbon atom to which they are attached, form a C₃-C₆ carbocycle,
R⁴ is H or C₁-C₄ alkyl, and
A is C₂-C₇-alkylene.

Preferably,
R¹ is H or methyl,
R² and R³ are independently selected from H, C₁-C₄ alkyl, cycloalkyl and phenyl-C₁-C₄-alkyl,
R⁴ is H or C₁-C₄ alkyl, and
A is C₂-C₄-alkylene.

For availability of starting materials and ease of production, R¹, R² and R³ may in particular be methyl, R⁴ may be H, and A may be -(CH₂)₂.

A suitable method for preparing the compound of formula (I) involves providing a compound of formula (Illa) 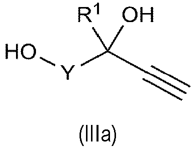 wherein Y and R¹ are as defined above.

For example, the compound of formula (IIIa) may be obtained by reacting the corresponding aldehyde or ketone with acetylene. This reaction is generally known as Reppe carbonyl ethynylation.

The compound of formula (Illa) may subsequently be reacted with carbon dioxide to obtain the compound of formula (IVa) 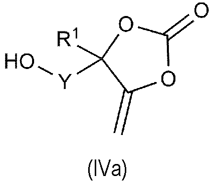 wherein Y and R¹ are as defined above.

The compound of formula (!Va) may be reacted with an n functional polyisocyanate under conditions such that essentially all isocyanate group are consumed by the reaction with the hydroxyl group of the compound of formula (IVa).

Alternatively, the compound of formula (lVa) may be reacted with a diisocyanate under conditions such that only a part of the isocyanate group(s) reacts with the compound of formula (lVa), e.g., on average one isocyanate group of the diisocyanate. Subsequently, the isocyanate-extended compound is reacted with a compound or a mixture of compounds having multiple isocyanate-reactive groups, wherein isocyanate-reactive groups are reacted with remaining isocyanate groups of the isocyanate-extended compound, to obtain the compound of formula (I). The compound having multiple isocyanate-reactive groups may be selected from polyols, polyamines, alkanolamines, and polythiols, and mixtures thereof, preferably polyols.

In the event that Y is 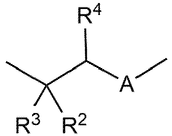 as described above, a method for preparing the compound of formula (I) may comprise hydrating a compound of formula (II) 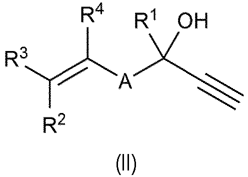 wherein A, R¹, R², R³ and R⁴ are as defined above.
to obtain a compound of formula (III) 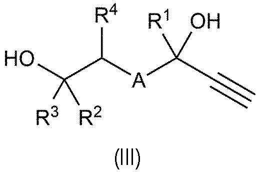
wherein A, R¹, R², R³ and R⁴ are as defined above,
and reacting the compound of formula (III) with carbon dioxide to obtain the compound of formula (IV): 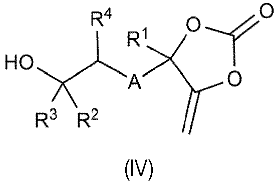
wherein A, R¹, R², R³ and R⁴ are as defined above.

Hydration of the compound of formula (II) to obtain the compound of formula (III) is suitably carried out in an aqueous solution. Suitably, the hydration reaction is carried out at room temperature. Preferably, the hydration reaction is acid-catalyzed. Suitable acids include mineral acids such as sulfuric acid. For example, the hydration reaction is carried out using a 35 wt.-% aqueous solution of H₂SO₄. Suitable reaction conditions are also described in GB 2515128 A.

Reacting the compound of formula (Illa) with carbon dioxide to obtain the compound of formula (lVa) is suitably carried out at reaction temperatures in the range of from 30 to 200 °C, preferably 50 to 130 °C. Suitable reaction conditions are also described in DE 1 098 953.

Reacting the compound of formula (Illa) with carbon dioxide to obtain the compound of formula (lVa) is suitably carried out at reaction pressures are in the range of from 1 to 100 bar, preferably 3 to 50 bar of carbon dioxide.

Reacting the compound of formula (Illa) with carbon dioxide to obtain the compound of formula (lVa) is usually carried out in a solvent such as methanol, tetrahydrofuran, 2-methyltetrahydrofuran, 1,4-dioxane, γ-valerolactone, acetonitrile, dichloromethane, and supercritical CO₂. At least a part of the solvent may be replaced by carbon dioxide (CO₂) at moderate pressures (tens of bars), a situation hereinafter referred to as "CO₂ expanded solvent". Suitably, at least 50 vol.-%, or at least 60 vol.-%, or at least 70 vol.-%, or at least 80 vol.-% of the solvent may be replaced by CO₂.

The reaction of the compound of formula (Illa) with carbon dioxide to obtain the compound of formula (lVa) is usually catalyzed.

Suitable catalysts include transition metal catalysts containing, for example, zinc, silver, copper, gold, palladium or platinum as the active metal, e.g. silver salts such as silver acetate, silver carbonate; copper(II) salts such as copper acetate or copper(I) halides such as Cui, CuBr, CuCI; and palladium(0) catalysts.

The transition metal compounds may be used in combination with an organic amine, an organic phosphine or a mixture of the organic phosphine with an ammonium salt. The organic amine may be selected from a tri-C₁-C₆-alkylamine such as triethylamine or an amidine base such as 1,5-diazabicyclo[4.3.0]non-5-ene (DBN) or 1,8-diazabicyclo[5.4.0]undec-7-ene (DBU). The organic phosphine may be selected from trialkylphosphines or triarylphosphines such as tributylphosphine and triphenylphosphine. The ammonium salt may be selected from tri-C₁-C₆-alkylammonium halides or tetra-C₁-C₆-alkylammonium halides.

Further suitable catalysts can be organic phosphines as such, e.g. trialkylphosphines or triarylphosphines such as tributylphosphine or triphenylphosphine, as well as sterically hindered carbenes, e.g. 1,3-substituted 2,3-dihydroimidazol-2-ylidene compounds such as 1,3-diisopropyl-2,3-dihydro-4,5-imidazole-2-ylidene compounds. e.g. 1,3-substituted 2,3-dihydroimidazol-2-ylidene compounds such as 1,3-diisopropyl-2,3-dihydro-4,5-imidazol-2-ylidene or their CO₂ adducts, as well as combinations thereof with the aforementioned phosphines.

Preferably, in the compound of formula (II), R¹, R² and R³ are methyl, R⁴ is H, and A is -(CH₂)₂. In this case, the compound of formula (II) is dehydrolinalool (DHL) which is advantageous as DHL is a readily available large volume industrial product.

Typically, in large scale, DHL is produced starting by ethynylation of 6-methyl-5-hepten-2-one.

In the compound of formula (I) as described above, T is a v functional organic residue. The term "v functional organic residue" is not subject to any particular limitation and may be a low molecular weight moiety, an oligomeric moiety or polymeric moiety. In particular, the v functional organic residue is formally derived from a polyisocyanate or extended polyisocyanate, in particular an extended diisocyanate with v isocyanate groups from which all isocyanate groups are removed. The partial reaction of polyisocyanates with a compound having multiple isocyanate-reactive groups such as polyols is referred to as extension of the isocyanate, the reactant used is referred to as an extender, and the reaction product is referred to as an extended isocyanate, even if that group is not literally synthesized in this manner. The actual building principle may be the other way round, and first a compound of formula (IVa) is reacted with the diisocyanate and the reaction product then reacted with the extender.

In certain embodiments, T may be selected from
(1) Q,
(2) 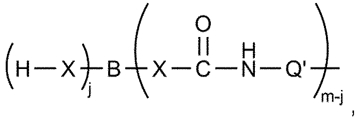 and
(3) 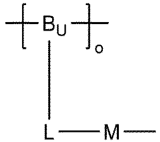 wherein
   M is 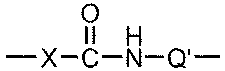 or a chemical bond,
   B is an m functional residue of a compound having m isocyanate-reactive groups,
   X is O, S or NE, wherein E is H or C₁-C₄ alkyl,
   Q is the residue of an n functional polyisocyanate,
   Q' is the residue of a diisocyanate,
   Bu is a backbone unit within a polymeric backbone,
   m is 2 to 50, preferably 2 to 8, more preferably 3 or 4,
   j is 0 to m-1,
   o is 2 to 50, and
   L is a linker.

### Case (1), involving Q being the residue of an n functional polyisocyanate

A "residue of an n functional polyisocyanate" is a polyisocyanate with n isocyanate groups from which all isocyanate groups are removed.

Q may comprise functional groups, in particular functional groups that do not interfere in the reaction of a) and b). These groups may include alkoxycarbonyl amide groups. Such alkoxycarbonyl amide groups may arise from an isocyanate group of the polyisocyanate that remains unreacted in the reaction with the compound of formula (IVa) described below. Said remaining isocyanate group may be quenched, e.g., with an alcohol such as methanol, ethanol and the like, to yield an alkoxycarbonyl amide group.

The term "polyisocyanate" includes isocyanate-functional materials that generally include at least two isocyanate groups. Polyisocyanates include diisocyanates (materials with two isocyanate groups) and higher polyisocyanates such as triisocyanates (materials with three isocyanate groups), tetraisocyanates (materials with four isocyanate groups), and the like. Where polyisocyanates are applied as technical mixtures, the number of isocyanate groups n is given as the average number of isocyanate groups per molecule in the technical mixture.

The n functional polyisocyanate may be a monomeric polyisocyanate or oligomeric polyisocyanate.

Monomeric polyisocyanates are usually diisocyanates. Diisocyanates may be generally described by the structure OCN-Z-NCO, where the Z group may be an aliphatic group, an aromatic group, or a group containing a combination of aromatic and aliphatic groups. In some embodiments, it is preferable to use a monomeric aliphatic isocyanate, such as pentamethylenediisocyanate (PDI), hexamethylenedisocyanate (HDI), dicyclohexylmethane-4,4'-diisocyanate (H12MDI), isophorone diisocyanate (IPDI), dimeryl diisocyanate (DDI). The term "aliphatic" refers to the carbon atoms to which the NCO groups of the monomer are bonded, i.e. the compound molecule may perfectly well contain aromatic rings, which do not then of course carry NCO groups. In some embodiments, it is preferable to use an n functional monomeric aromatic isocyanate, such as toluene diisocyanate (TDI), 4,4'-methylene diphenyl diisocyanate (MDI), naphthalene diisocyanate (NDI), and oligomers, derivatives, or combinations of these isocyanates.

Oligomerization of isocyanates is a long-known, generally accepted method of modifying low molecular weight isocyanates, which are usually difunctional, in order to obtain products with advantageous application properties.

Higher functional polyisocyanates, i.e. n functional oligomeric polyisocyanates, may also be used. Such n functional oligomeric polyisocyanates include, but are not limited to, polyisocyanates, such as those produced from uretdiones, isocyanurates, biurets, allophanates, oxadiazinediones, iminooxadiazinediones, uretoneimines, carbodiimides, and the like. Particularly important procedures are so-called dimerization to form uretdione structures and so-called trimerization to form isocyanurate structures. In addition to the last-mentioned trimers, isomeric, i.e. also trimeric products with an iminooxadiazindione structure can be obtained.

Uretdione diisocyanates are cyclic dimerization products of diisocyanates. Preference is given to uretdione diisocyanates with aromatically, aliphatically and/or cycloaliphatically attached isocyanate groups, more preferably aliphatically and/or cycloaliphatically attached, and in particular those derived from hexamethylene diisocyanate or isophorone diisocyanate.

Regarding polyisocyanates having isocyanurate groups, preference is given to those derived from aromatic, aliphatic and/or cycloaliphatic diisocyanates. Particular preference is given to the corresponding aliphatic and/or cycloaliphatic isocyanatoisocyanurates and in particular to those based on hexamethylene diisocyanate and isophorone diisocyanate. These present isocyanurates are, in particular, tris-isocyanatoalkyl and/or tris-isocyanatocycloalkyl isocyanurates, which are cyclic trimers of the diisocyanates, or are mixtures with their higher homologs containing more than one isocyanurate ring. The isocyanatoisocyanurates generally have an NCO content of 10 to 30 wt.-%, in particular 15 to 25 wt.-%, and an average NCO functionality of 2.6 to 8.

Regarding polyisocyanates having biuret groups, preference is given to those having aromatically, cycloaliphatically or aliphatically attached, preferably cycloaliphatically or aliphatically attached, isocyanate groups, especially tris(6-isocyanatohexyl)biuret or mixtures with higher homologs thereof. These polyisocyanates having biuret groups generally have an NCO content of 18 to 22 wt.-% and an average NCO functionality of 2.8 to 4.5.

Regarding polyisocyanates having urethane and/or allophanate groups, preference is given to those having aromatically, aliphatically or cycloaliphatically attached, preferably aliphatically or cycloaliphatically attached, isocyanate groups. They may be obtained, for example, by reacting excess amounts of hexamethylene diisocyanate or of isophorone diisocyanate with mono- or polyhydric alcohols, for example methanol, ethanol, iso-propanol, n-propanol, n-butanol, iso-butanol, sec-butanol, tert-butanol, n-hexanol, n-heptanol, n-octanol, n-decanol, n-dodecanol (lauryl alcohol), 2-ethylhexanol, n-pentanol, stearyl alcohol, cetyl alcohol, lauryl alcohol, ethylene glycol monomethyl ether, ethylene glycol monoethyl ether, propane-1,3-diol monomethyl ether, cyclopentanol, cyclohexanol, cyclooctanol, cyclododecanol, trimethylolpropane, neopentyl glycol, pentaerythritol, butane-1,4-diol, hexane-1,6-diol, propane-1,3-diol, 2-ethylpropane-1,3-diol, 2-methylpropane-1,3-diol, ethylene glycol, diethylene glycol, triethylene glycol, tetraethylene glycol, pentaethylene glycol, glycerol, 1,2-dihydroxypropane, 2,2-dimethylethane-1,2-diol, butane-1,2-diol, butane-1,4-diol, 3-methylpentane-1,5-diol, 2-ethylhexane-1,3-diol, 2,4-diethyloctane-1,3-diol, hydroxypivalic acid neopentyl glycol ester, ditrimethylolpropane, dipentaerythritol, 2,2-bis(4-hydroxycyclohexyl)propane, cyclohexane-1,1-, -1,2-, - 1,3- and -1,4-dimethanol, cyclohexane-1,2-, -1,3- or -1,4-diol, or mixtures thereof. These polyisocyanates having urethane and/or allophanate groups generally have an NCO content of 12 to 20 wt.-% and an average NCO functionality of 2.5 to 4.5
Regarding polyisocyanates having oxadiazinetrione groups, preference is given to those derived from hexamethylene diisocyanate or isophorone diisocyanate. Polyisocyanates of this kind comprising oxadiazinetrione groups are obtainable from diisocyanate and carbon dioxide.

Regarding polyisocyanates having iminooxadiazinedione groups, preference is given to those derived from hexamethylene diisocyanate or isophorone diisocyanate. Polyisocyanates of this kind comprising iminooxadiazinedione groups are preparable from diisocyanates by means of specific catalysts.

Suitable commercially available polyisocyanates include hexamethylenedisocyanate (HDI), isophorone diisocyanate (IPDI), members of the BASONAT series (available from BASF), members of the VESTANAT series (available from Evonik), members of the WANNATE series (available from Vencorex und Wanhua), and members of the DESMODUR and MONDUR series (available from Covestro AG).

Specifically, Q may be the residue of
an n functional monomeric polyisocyanate which is selected from
   - pentamethylenediisocyanate (PDI),
   - hexamethylenedisocyanate (HDI),
   - dicyclohexylmethane-4,4'-diisocyanate (H12MDI),
   - isophorone diisocyanate (IPDI),
   - dimeryl diisocyanate (DDI),
   - toluene diisocyanate (TDI),
   - 4,4'-methylene diphenyl diisocyanate (MDI),
   - naphthalene diisocyanate (NDI),
   - m-xylylenediisocyanate (XDI),
      or
an n functional oligomeric polyisocyanate which is selected from
   - oligomeric MDI (also referred to as "polymeric MDI" (PMDI)),
   - polyisocyanates having uretdione groups,
   - polyisocyanates having isocyanurate groups,
   - polyisocyanates having biuret groups,
   - polyisocyanates having urethane groups or allophanate groups,
   - polyisocyanates comprising oxadiazinetrione groups,
   - uretonimine-modified polyisocyanates,
   - carbodiimide-modified polyisocyanates,
   - polyurethane-polyisocyanate prepolymers or polyurea-polyisocyanate prepolymers, preferably of linear or branched C₄-C₂₀-alkylene diisocyanates and/or cycloaliphatic diisocyanates having a total of 6 to 20 carbon atoms,
or combinations of these polyisocyanates.

Isophorone diisocyanate (IPDI) comprises two isocyanate groups with different reactivities. Upon reaction of isophorone diisocyanate (IPDI), e.g. with an isocyanate-reactive group, in particular with the compound of formula (IVa) described below, it may depend on the reaction conditions which of the isocyanate groups reacts first. The resulting reaction product may comprise different constitutional isomers. In the structural formulae herein, one possible constitution of the reaction product is shown. However, this is also intended to denote other possible constitutional isomers, or mixtures.

Preparing the compound of formula (I) of case (1) as defined above, i.e. with T being Q, comprises reacting the n functional polyisocyanate with the compound of formula (lVa) as described above: 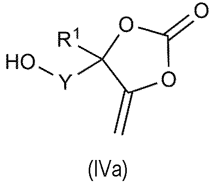 wherein Y and R¹ are as defined above.

The method for reacting the compound of formula (IVa) with the n functional polyisocyanate is suitably carried out at reaction temperatures in the range of from 20 to 150 °C.

The method for reacting the compound of formula (IVa) with the n functional polyisocyanate is suitably carried out at a molar ratio of hydroxyl groups of the compound of formula (lVa) to isocyanate groups of the n functional polyisocyanate in the range of from 1 : 2 to 2 : 1.

The method for reacting the compound of formula (lVa) with the n functional polyisocyanate is suitably carried out in a solvent, the solvent preferably being selected from tetrahydrofuran, γ-valerolactone, ethyl acetate, butyl acetate, propyl propionate, acetone, methyl ethyl ketone, methyl propyl ketone, methyl isoamyl ketone, dichloromethane, toluene, and xylene.

The method for reacting the compound of formula (IVa) with the n functional polyisocyanate is suitably carried out in the presence of a catalyst. Useful catalysts include metal-containing and non-metal-containing catalysts. Examples of the metal portion of the catalysts include tin, titanium, zirconium, lead, iron cobalt, antimony, manganese, bismuth and zinc compounds. Other suitable non-limiting examples of catalysts include chelates of various metals such as those which can be obtained from acetylacetone, benzoylacetone, trifluoroacetylacetone, ethyl acetoacetate, salicylaldehyde, cyclopentanone-2-carboxylate, acetylacetoneimine, bis-acetylaceone-alkylenediimines, salicylaldehydeimine, and the like, with the various metals such as Al, Be, Mg, Zn, Cd, Pb, Ti, Zr, Sn, As, Bi, Cr, Mo, Mn, Fe, Co, Ni, and metal oxide ions; alcoholates and phenolates of various metals such as Ti(OR)₄, Sn(OR)₄, Sn(OR)₂, Al(OR)₃, Bi(OR)₃ and the like, wherein R is alkyl or aryl of from 1 to 18 carbon atoms, and reaction products of alcoholates of various metals with carboxylic acids, beta-diketones, and 2-(N,N-dialkylamino)alkanols, such as well known chelates of titanium obtained by this or equivalent procedures.

Additional useful catalysts include organometallic derivatives of tetravalent tin, trivalent and pentavalent As, Sb, and Bi, and metal carbonyls of iron and cobalt; and combinations thereof. In one specific embodiment organotin compounds that are dialkyltin salts of carboxylic acids, can include the non-limiting examples of dibutyltin diacetate, dibutyltin dilaurate, dibutyltin maleate, dilauryltin diacetate, dioctyltin diacetate, dibutyltin-bis(4-methylaminobenzoate), dibutyltindilaurylmercaptide, dibutyltin-bis(6-methylaminocaproate), and the like, and combinations thereof. Similarly, there may be used trialkyltin hydroxide, dialkyltin oxide, dialkyltin dialkoxide, or dialkyltin dichloride and combinations thereof. Non-limiting examples of these compounds include trimethyltin hydroxide, tributyltin hydroxide, trioctyltin hydroxide, dibutyltin oxide, dioctyltin oxide, dilauryltin oxide, dibutyltin-bis(isopropoxide), dibutyltin-bis(2-dimethylaminopentylate), dibutyltin dichloride, dioctyltin dichloride, and the like, and combinations thereof.

After completion of the reaction, the catalyst is suitably removed by adsorption on an adsorbent selected from metal oxides and metal hydroxides, such as aluminum oxide, silica, clays, activated carbon, or combinations thereof.

### Cases (2) and (3), involving Q' being the residue of a diisocyanate

Q' may be the residue of a diisocyanate which is preferably selected from
- pentamethylenediisocyanate (PDI),
- hexamethylenedisocyanate (HDI),
- dicyclohexylmethane-4,4'-diisocyanate (H12MDI),
- isophorone diisocyanate (IPDI),
- dimeryl diisocyanate (DDI),
- toluene diisocyanate (TDI),
- 4,4'-methylene diphenyl diisocyanate (MDI),
- naphthalene diisocyanate (NDI)

### Case (2), involving B being an m functional residue of a compound having m isocyanate-reactive groups

A part of the isocyanate group(s) of the diisocyanate OCN-Q'-NCO may react with the hydroxyl group of the compound of formula (IVa) 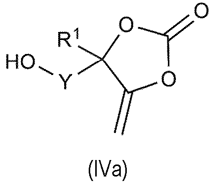
wherein Y and R¹ are as defined above,
and the remaining isocyanate group may undergo a subsequent reaction with compounds having m isocyanate-reactive groups.

This results in a compound of formula (I) of case (2), i.e. wherein T is selected from 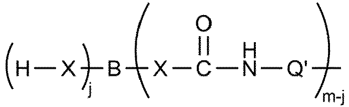 wherein
B is an m functional residue of a compound having m isocyanate-reactive groups,
Q' is the residue of a diisocyanate,
X is O, S or NE, wherein E is H or C₁-C₄ alkyl,
m is 2 to 50, preferably 2 to 8, more preferably 3 or 4, and
j is 0 to m-1.

A "residue of a compound having m isocyanate-reactive groups" is a compound having m isocyanate-reactive groups from which all isocyanate-reactive groups are removed.

Preferably, the compound having m isocyanate-reactive groups is selected from polyols, polyamines, alkanolamines, and polythiols, and mixtures thereof.

The polyol may be selected from alkanepolyols, intramolecular or intermolecular dehydration products of alkanepolyols, alkoxylation products of alkanepolyols, polyvinyl alcohols and acrylic polyols, polyesterpolyols, polyetherpolyols, and mixtures thereof.

Alkanepolyols and intramolecular or intermolecular dehydration products thereof, preferably C₃-C₈-alkanepolyols and intramolecular or intermolecular dehydration products thereof, include glycerin, 1,2,6-trihydroxyhexane, 1,2,3-butanetriol, 1,2,3-hexanetriol, trimethylolethane, trimethylolpropane, pentaerythritol, sorbitol, sorbitan, 1,2,3-cyclohexanetriol and polyglycerin.

Alkoxylation products of alkanepolyols are reaction products obtained from the reaction of any of the above-mentioned alkanepolyols with alkylene oxides. Suitable alkylene oxides are selected from C₂-C₄ alkylene oxides, preferably ethylene oxide and propylene oxide. The alkoxylation products of alkanepolyols may have an average degree of alkoxylation in the range of from 0.1 to 8, per hydroxyl group. Suitable commercially available alkoxylation products of alkanepolyols are selected from alkoxylated glycerol, alkoxylated pentaerytitol, alkoxylated di-pentaerythritol, alkoxylated sugar derivatives, alkoxylated trimethylolpropane, and alkoxylated trimethylolpropane dimer.

Polyvinyl alcohols suffice the following general formula (A)

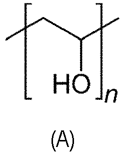

Suitable polyvinyl alcohols are those of formula (A) with n being selected such that the molecular weight of the polyvinyl alcohol is in the range of from 13000 to 130000.

Acrylic polyols (hydroxyl functional acrylic polymer) include copolymers of hydroxyethyl (meth)acrylate and other vinyl monomers.

Polyesterpolyols are known, for example, from Ullmanns Enzyklopädie der technischen Chemie, 4th Edition, Volume 19, pages 62 to 65. Polyesterpolyols may be obtained by reacting dihydric alcohols with dibasic carboxylic acids. For example, polyesterpolyols may be prepared from the above-mentioned polyols with polycarboxylic acids. Non-limiting examples of suitable polycarboxylic acids include phthalic acid, isophthalic acid, terephthalic acid, trimellitic acid, tetrahydrophthalic acid, adipic acid, succinic acid, glutaric acid, fumaric acid, and combinations thereof. Anhydrides of the above polycarboxylic acids can also be employed and are encompassed by the term "polycarboxylic acid". In addition, certain materials which react in a manner similar to acids to form polyesterpolyols can also be used. Non-limiting examples of such materials include lactones, such as caprolactone, propiolactone, and butyrolactone, and hydroxy acids, such as hydroxycaproic acid and dimethylol propionic acid. Moreover, as used herein, the polyesterpolyols can also include polyesterpolyols modified with fatty acids or glyceride oils of fatty acids. The polyesterpolyol can also be prepared by reacting an alkylene oxide, such as ethylene oxide, propylene oxide, and the like, and the glycidyl esters of versatic acid with methacrylic acid to form the corresponding ester. Suitable polyesterpolyols can also include polyester diols such as polycaprolactone diol. Non-limiting examples of commercially available polyesterpolyols include members of the LUPRAPHEN series (available from BASF), members of the DYNACOLL series (available from Evonik Industries) or members of the DESMOPHEN and BAYCOLL series (available from Covestro).

Polyetherpolyols are known per se may be prepared by self-polymerization of epoxides such as ethylene oxide, propylene oxide, butylene oxide or tetrahydrofuran, or by addition of these epoxides, preferably of ethylene oxide and propylene oxide, where appropriate mixed together or separately and consecutively, onto starter components having at least two reactive hydrogen atoms, such as water, ethylene glycol, propylene glycol, diethylene glycol, dipropylene glycol, glycerol, trimethylolpropane, pentaerythritol, sorbitol or sucrose. Representatives of the high molecular weight polyhydroxy compounds mentioned for use are listed for example in High Polymers, Vol. XVI, "Polyurethanes, Chemistry and Technology" (Saunders-Frisch, Interscience Publishers, New York, Vol. 1, 1962, pages 32-42).

The polyol may be a renewably based polyol meaning that it is a natural product derived from natural sources. For example, the renewably based polyol may be selected from mono-, di- and polysaccharides, and hydroxyl-containing fatty oils which, for example, have 12 to 32 carbon atoms. Specific examples include glycerol, sorbitol, isosorbide, and the like.

The amino groups of the polyamine may be aliphatically-, cycloaliphatically-, araliphatically- or aromatically-bound.

The polyamine may be selected from
- aliphatic diamines or polyamines such as ethylene diamine, 1,2-propane diamine, 1,3-propane diamine, 1,4-butane diamine, 1,3-pentane diamine, 1,5-pentane diamine, 1,6-hexane diamine, 1,8-octane diamine, neopentane diamine, 1,10-decane diamine, 1,12-dodecane diamine, 2-methylpentane-1,5-diamine, N,N'-dimethyl-ethylene diamine, diethylene triamine, triethylene tetraamine, tetraethylene pentamine, pentaethylene hexamine, 2,2-dimethylpropylenediamine, trimethylhexamethylenediamine, 1-(3-aminopropyl)-3-aminopropane, 1,3-bis(3-aminopropyl)propane, 4-ethyl-4-methylamino-1-octylamine, N,N,N-tris-(2-aminoethyl)-amine, N,N,N'-tris-(2-aminoethyl)-ethylene diamine, polyethylene imines, polyvinylamines, polyallylamines, polylysines, iminobis-propylamine, N-(2-aminoethyl)-1,3-propane diamine, tetrapropylene pentamine, tripropylene tetramine, N,N-bis-(6-aminohexyl)-amine, N,N'-bis-(3-aminopropyl)-ethylene diamine, aminoethylethanolamine,
- cycloalkylenediamines or (cyclo)alkylenepolyamines such as cyclohexyldiamines such as 1,2-diaminocyclohexane, 1-methyl-2,4-diaminocyclohexane, 1-methyl-2,6-diaminocyclohexane, 1-amino-3-aminomethyl-3,5,5-trimethylcyclohexane (isophorone diamine), bis-(4-aminocyclohexyl)-methane, bis-(4-amino-3-methylcyclohexyl)-methane, 1,2-bis(aminomethyl)cyclohexane, 1,3-bis(aminomethyl)cyclohexane, 1,4-bis(aminomethyl)cyclohexane, 2,5-bisaminomethyl tetrahydrofuran, 4,4'-diamino-dicyclohexylmethane, 3,3'-dimethyl-4,4'-diamino-dicyclohexylmethane, 3,3',5,5'-tetramethyl-4,4'-diaminodicyclohexylmethane, N-cyclohexylpropylene-1,3-diamine, 4,8-diamino-tricyclo[5.2.1.0]decane, norbornandiamine, menthanediamine, menthenediamine,
- heterocyclic diamines or polyamines such as piperazine, 2,5-dimethyl piperazine, N-(2-piperazinoethyl) ethylene diamine, N,N'-bis-(2-aminoethyl)-piperazine, N-[N-(2-aminoethyl)-2-amino-ethyl]-N'-(2-aminoethyl)-piperazine, N-(2-aminoethyl)-N'-(2-piperazinoethyl)-ethylene diamine, N,N-bis-(2-aminoethyl)-N-(2-piperazinoethyl)-amine, N,N-bis-(2-piperazinoethyl)-amine,
- hydrazine, aminoacid hydrazides, hydrazides of semicarbazido carboxylic acids, bis-hydrazides, bis-semicarbazides,
- guanidine,
- aromatic diamines or polyamines such as melamine, 3,3'-diaminobenzidine, 2,4,6-triaminopyrimidine, 2,4-bis-(4'-aminobenzyl)-aniline, diethyl-toluene diamine isomers, toluene diamine isomers, xylylene diamine isomers, 1,2-phenylene diamine, 1,3-phenylene diamine, 1,4-phenylene diamine, methylene-bis-(phenylamine) isomers such as 4,4'-diamino-diphenylmethane or 4,4'-diaminodiphenylsulfone, 2,5-bisaminomethyl furan, 1,5-naphthalene diamine, aniline, alkyl anilines, toluidine, t-butyl-toluene diamine isomers, methylene-bis-(o-dichloroaniline) (MOCA), 2,4-diaminoalkylbenzene isomers having 8 to 15 carbon atoms in the alkyl chain,
- polyetheramines (alkylene diamines or alkylene polyamines comprising ether groups) such as difunctional and trifunctional primary polyetheramines based on polypropylene glycol, polyethylene glycol, polybutylene oxide, poly-(1,4-butanediol), polytetrahydrofuran (poly-THF) or polypentylene oxide, e.g. 4,7,10-trioxatridecan-1,3-diamine, 4,7,10-trioxatridecan-1,13-diamine, 1,8-diamino-3,6-dioxaoctane (XTJ-504, Huntsman), 1,10-diamino-4,7-dioxadecane (XTJ-590, Huntsman), 1,12-diamino-4,9-dioxadodecane (BASF SE), 1,3-diamino-4,7,10-trioxatridecane (BASF SE), primary polyetheramines based on polypropylene glycol with an average molecular weight of 230, such as Polyetheramine D 230 (BASF SE) or Jeffamine^{®} D 230 (Huntsman), difunctional, primary polyetheramines based on polypropylene glycol with an average molecular weight of 400, e.g. Polyetheramine D 400 (BASF SE) or Jeffamine^{®} XTJ 582 (Huntsman), difunctional, primary polyetheramines based on polypropylene glycol with an average molecular weight of 2000, e.g. Polyetheramine D 2000 (BASF SE) or Jeffamine^{®} XTJ 582 (Huntsman), difunctional, primary polyetheramines based on polypropylene glycol with an average molecular weight of 2000, e.g. Polyetheramine D 2000 (BASF SE) or Jeffamine^{®} XTJ 582 (Huntsman), e.g. Polyetheramine D 2000 (BASF SE), Jeffamine^{®} D2000 or Jeffamine^{®} XTJ 578 (both from Huntsman), difunctional, primary polyetheramines based on propylene oxide with an average molecular weight of 4000, e.g. Polyetheramine D 4000 (BASF SE), trifunctional, primary polyetheramines prepared by reaction of propylene oxide with trimethylolpropane, followed by amination of the terminal OH groups with an average molecular weight of 403, e.g. Polyetheramine T 403 (BASF SE) or Jeffamine^{®} T 403 (Huntsman), trifunctional, primary polyetheramines prepared by reaction of propylene oxide with glycerol, followed by amination of the terminal OH groups with an average molecular weight of 5000 (Huntsman), trifunctional, primary polyetheramine prepared by reaction of propylene oxide with glycerol, followed by amination of the terminal OH groups with an average molecular weight of 5000, such as Polyetheramine T 5000 (BASF SE) or Jeffamine^{®} T 5000 (Huntsman), aliphatic polyetheramines, which are composed of a polyethylene glycol grafted with propylene oxide and have an average molecular weight of 600, such as Jeffamine^{®} ED-600 or Jeffamine^{®} XTJ-501 (Huntsman), aliphatic polyetheramines which are composed of a polyethylene glycol grafted with propylene oxide and have an average molecular weight of 900, such as Jeffamine^{®} ED-900 (Huntsman), aliphatic polyetheramines which are composed of a polyethylene glycol grafted with propylene oxide and have an average molecular weight of 2000, e.g. Jeffamine^{®} ED-2003 (Huntsman), difunctional, primary polyether amines produced by amination of a diethylene glycol grafted with propylene oxide with an average molecular weight of 220, e.g. Jeffamine^{®} HK-511 (Huntsman), aliphatic polyether amines based on a copolymer of poly(tetramethylene ether glycol) and polypropylene glycol with an average molecular weight of 1000 (Huntsman), aliphatic polyether amines based on a copolymer of poly(tetramethylene ether glycol) and polypropylene glycol with an average molecular weight of 1000, such as Jeffamine^{®} XTJ-542 (Huntsman), aliphatic polyether amines based on a copolymer of poly(tetramethylene ether glycol) and polypropylene glycol with an average molecular weight of 1900, such as Jeffamine^{®} XTJ-542 (Huntsman), aliphatic polyether amines based on a copolymer of poly(tetramethylene ether glycol) and polypropylene glycol with an average molecular weight of 1900, such as Jeffamine^{®} XTJ-542 (Huntsman), polyether triamines based on an at least trivalent alcohol grafted with butylene oxide with an average molecular weight of 400, e.g. Jeffamine^{®} XTJ-566 (Huntsman), aliphatic polyether amines produced by amination of alcohols grafted with butylene oxide with an average molecular weight of 219, e.g. Jeffamine^{®} XTJ-568 (Huntsman), polyetheramines based on pentaerythritol and propylene oxide with an average molecular weight of 600, e.g. Jeffamine^{®} XTJ-616 (Huntsman), polyetheramines based on triethylene glycol with an average molecular weight of 148, e.g. Jeffamine^{®} EDR-148 (Huntsman), difunctional, primary polyether amines produced by amination of an ethylene glycol grafted with propylene oxide with an average molecular weight of 176, e.g. Jeffamine^{®} EDR-176 (Huntsman) and polyether amines prepared by amination of polytetrahydrofuran (Poly-THF) with an average molecular weight of 250, e.g. PolyTHF-Amin 350 (BASF SE),
- amino acids with two amino groups such as lysin, ornithin,
- polyamidoamines (amidopolyamines) which are obtainable by the reaction of dimeric fatty acids (e.g. dimeric linoleic acid) with low molecular weight polyamines such as diethylenetriamine, 1-(3-aminopropyl)-3-aminopropane or triethylenetetramine or other diamines such as the aliphatic or cycloaliphatic diamines,
- adducts which are obtainable by reacting amines, in particular diamines, with an admixture of epoxy resin or reactive diluent, preferably using adducts in which about 5 to 20 % of the epoxy groups have been reacted with amines, in particular diamines,
- Mannich bases which are obtained, for example, by condensation of polyamines, preferably diethylenetriamine, triethylenetetramine, isophorone diamine, 2,2,4- or 2,4,4-trimethylhexamethylenediamine, 1,3- and 1,4-bis(aminomethyl)cyclohexane with aldehydes, preferably formaldehyde and mono- or polyhydric phenols with at least one aldehyde-reactive core site, e.g. the various cresols and xylenols, p-tert-butylphenol, resorcinol, 4,4'-dihydroxydiphenylmethane, 4,4'-dihydroxydiphenyl-2,2-propane, preferably phenol.
- and mixtures thereof.

The polyamine may be silane-functionalized.

The alkanolamine may be selected from monoalkanolamines, dialkanolamines, trialkanolamines, tetraalkanolamines, or combinations thereof.

Examples of suitable monoalkanolamines include methylethanolamine, ethylethanolamine, methylisopropanolamine, ethylisopropanolamine, methyl-2-hydroxybutylamine, phenylethanolamine, ethanolamine, isopropanolamine, and combinations thereof.

Suitable dialkanolamines include dialkanolamines which include two hydroxy-substituted C₁-C₁₂ alkyl groups (e.g., two hydroxy-substituted C₁-C₈ alkyl groups, or two hydroxy-substituted C₁-C₆ alkyl groups). The two hydroxy-substituted alkyl groups can be branched or linear, and can be of identical or different chemical composition. Examples of suitable dialkanolamines include diethanolamine, diisopropanolamine, ethanolisopropanolamine, ethanol-2-hydroxybutylamine, isopropanol-2-hydroxybutylamine, isopropanol-2-hydroxyhexylamine, ethanol-2-hydroxyhexylamine, and combinations thereof.

Suitable trialkanolamines include trialkanolamines which include three hydroxy-substituted C₁-C₁₂ alkyl groups (e.g., three hydroxy-substituted C₁-C₈ alkyl groups, or three hydroxy-substituted C₁-C₆ alkyl groups). The three hydroxy-substituted alkyl groups can be branched or linear, and can be of identical or different chemical composition. Examples of suitable trialkanolamines include triisopropanolamine (TIPA), triethanolamine, N,N-bis(2-hydroxyethyl)-N-(2-hydroxypropyl)amine (DEIPA). N,N-bis(2-hydroxypropyl)-N-(hydroxyethyl)amine (EDIPA), tris(2-hydroxybutyl)amine, hydroxyethyl di(hydroxypropyl)amine, hydroxypropyl di(hydroxyethyl)amine, tri(hydroxypropyl)amine, hydroxyethyl di(hydroxy-n-butyl)amine, hydroxybutyl di(hydroxypropyl)amine, and combinations thereof.

Exemplary tetraalkanolamines include four hydroxy-substituted C₁-C₁₂ alkyl groups (e.g., four hydroxy-substituted C₁-C₈ alkyl groups, or four hydroxy-substituted C₁-C₆ alkyl groups).

The polythiol may be selected from glycol-bis(2-mercaptoacetate), glycol-bis(3-mercaptopropionate), 1,2-propylene glycol-bis(2-mercaptoacetate), 1,2-propylene glycol-bis(3-mercaptopropionate), 1,3-propylene glycol-bis(2-mercaptoacetate), 1,3-propylene glycol-bis(3-mercaptopropionate), tris(hydroxymethyl)methane-tris(2-mercaptoacetate), tris(hydroxymethyl)methane-tris(3-mercaptopropionate), 1,1,1-tris(hydroxymethyl)ethane-tris(2-mercaptoacetate), 1,1,1-tris(hydroxymethyl)ethane-tris(3-mercaptopropionate), 1,1,1-trimethylolpropane-tris(2-mercaptoacetate), ethoxylated 1,1,1-trimethylolpropane-tris(2-mercaptoacetate), propoxylated 1,1,1-trimethylolpropane-tris(2-mercaptoacetate), 1,1,1-trimethylol propane-tris(3-mercaptopropionate), ethoxylated 1,1,1-trimethylolpropane-tris(3-mercaptopropionate), propoxylated trimethylolpropane-tris(3-mercaptopropionate), 1,1,1-trimethylolpropane-tris(3-mercaptobutyrate), pentaerythritol-tris(2-mercaptoacetate), pentaerythritol-tetrakis(2-mercaptoacetate), pentaerythritol-tris(3-mercaptopropionate), pentaerythritol-tetrakis(3-mercaptopropionate), pentaerythritol-tris(3-mercaptobutyrate), pentaerythritol-tetrakis(3-mercaptobutyrate), Capcure^{®} 3-800, GPM-800 (Gabriel Performance Products), Capcure^{®} LOF, GPM-800LO (Huntsman), KarenzMT PE-1 (Showa Denko), 2-ethylhexylthioglycolate, iso-octylthioglycolate, di(n-butyl)thiodiglycolate, glycol-di-3-mercaptopropionate, 1,6-hexanedithiol, 3,6-dioxa-1,8-octanedithiol, and tetra(ethylene glycol)dithiol.

Preferably, in the compound of formula (I) of case (2) above, X is O. Although any of the above-mentioned polyols, polyamines, alkanolamines, and polythiols may react with the compound of formula (lVa) to yield the compound of formula (I), preference is given to polyols. While polyamines, alkanolamines, and polythiols may react at least partially with the exo-VC group besides the isocyanate group of the compound of formula (IVa), polyols preferably react with the isocyanate group(s) while the exo-VC group advantageously remains unreacted.

Preparing the compound of formula (I) of case (2) as defined above, i.e. with T being Q', comprises reacting the compound of formula (lVa) with the diisocyanate yielding an isocyanate-extended compound as described above, followed by reaction of the isocyanate-extended compound with the compound having m isocyanate-reactive groups.

The method for reacting the isocyanate-extended compound with the compound having m isocyanate-reactive groups is suitably carried out at reaction temperatures in the range of from 20 to 150 °C.

The method for reacting the isocyanate-extended compound with the compound having m isocyanate-reactive groups is suitably carried out at a molar ratio of isocyanate groups in the isocyanate-extended compound to the isocyanate-reactive groups in the compound having m isocyanate-reactive groups in the range of from 1 : 2 to 2:1.

The method for reacting the isocyanate-extended compound with the compound having m isocyanate-reactive groups is suitably carried out in a solvent, the solvent preferably being selected from tetrahydrofuran, γ-valerolactone, ethyl acetate, butyl acetate, propyl propionate acetone, methyl ethyl ketone, methyl propyl ketone, methyl isoamyl ketone dichloromethane, toluene, and xylene.

The method for reacting the isocyanate-extended compound with the compound having m isocyanate-reactive groups is suitably carried out in the presence of a catalyst, the catalyst preferably being selected from dibutyltin dilaurate. After completion of the reaction, the catalyst is suitably removed by adsorption on an adsorbent selected from metal oxides and metal hydroxides, such as aluminum oxide, silica, clays, activated carbon, or combinations thereof.

### Case (3), involving Bu being a backbone unit within a polymeric backbone

In case (3), the compounds of formula (I) comprise a backbone unit Bu within a polymeric backbone. The backbone unit Bu results from polymerization of polymerizable groups PG, such as radically polymerizable groups.

Compounds of formula (I) of case (3) comprising a backbone unit Bu within a polymeric backbone may be obtained from a compound of formula (Ia) 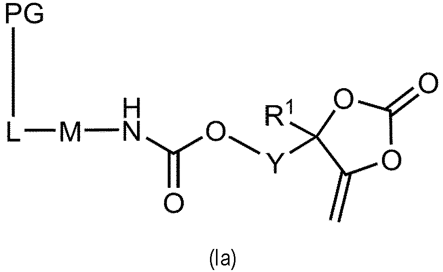 wherein
M is 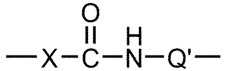 or a chemical bond,
PG is a radically polymerizable group,
L is a linker,
X is O, S or NE, wherein E is H or C₁-C₄ alkyl,
Q' is the residue of a diisocyanate
R¹ is H or methyl, and
Y is as defined above.

The radically polymerizable compound of formula (la) may be polymerized yielding a polymeric compound sufficing formula (I) of case (3) above. Said compound comprises a polymeric backbone comprised of a plurality of backbone units Bu.

Suitable polymerization initiators for initiating polymerization of the radically polymerizable compound of formula (la) may be a peroxo-type initiator, an azo-type initiator or a redox initiator system.

Examples of a peroxo-type initiator include t-amyl peroxybenzoate, dibenzoyl peroxide, 2,2-bis(t-butylperoxy)butane, 1,1-bis(t-butylperoxy)-cyclohexane, 2,5-bis(t-butylperoxy)-2,5-dimethylhexane, 1,1-bis(t-butylperoxy)-3,3,5-trimethylcyclohexane, t-butyl hydroperoxide, t-butyl peracetate, t-butyl-peroxypivalate, t-amyl-peroxypivalate, t-butylperoxide, t-butyl peroxybenzoate, t-butylperoxy isopropyl carbonate, cumene hydroperoxide, cyclohexanone peroxide, dicumyl peroxide, lauroyl peroxide, 2,4-pentanedione peroxide, peracetic acid and potassium persulfate.

Examples of an azo-type initiator include 2,2'-azobisiso-butyronitrile (AIBN), 1,1'-azobis(cyclo-hexanecarbonitrile), 2,2'-azobis(2-methylbutyronitrile), 2-t-butylazo-2-cyanopropane and dimethyl-2,2'-azobis(2-methylpropionate).

Examples of redox initiator system are combinations of an oxidizing compound and a reducing compound. Examples of an oxidizing compound include the peroxo-type initiators listed above. Examples of a reducing compound include sulfur compounds with a low oxidation state such as alkali metal sulfites, for example potassium and/or sodium sulfite, alkali metal hydrogensulfites, for example potassium and/or sodium hydrogensulfite, alkali metal metabisulfites, for example potassium and/or sodium metabisulfite, formaldehyde sulfoxylates, for example potassium and/or sodium formaldehyde sulfoxylate, alkali metal salts, specifically potassium and/or sodium salts of aliphatic sulfinic acids and alkali metal hydrogensulfides, for example potassium and/or sodium hydrogensulfide, salts of polyvalent metals, such as iron(II) sulfate, iron(II) ammonium sulfate, iron(II) phosphate, ene diols such as dihydroxymaleic acid, benzoin and/or ascorbic acid, and reducing saccharides such as sorbose, glucose, fructose and/or dihydroxyacetone.

Polymerization of the radically polymerizable compound of formula (la) is suitably carried out at reaction temperatures in the range of from 60 to 200 °C.

Polymerization of the radically polymerizable compound of formula (Ia) is suitably carried out in a solvent.

Suitable solvents include aprotic solvents or protic solvents as well as any mixture of an aprotic and protic solvent.

Examples of aprotic solvents include aromatic hydrocarbons like toluene, xylenes, o-xylene or chlorobenzene; aliphatic hydrocarbons like cyclohexane, n-heptane or 1,2-dichloroethane; ketones like cyclohexanone, acetone, butanone or methyl amyl ketone; ethers like dioxane, monoglyme, 2-methyl-tetrahydrofuran or anisole; esters like ethyl acetate, propyl acetate, n-butyl acetate, methyl butyrate, ethyl butyrate, propyl butyrate, methyl propionate, ethyl propionate, propyl propionate, cyclohexyl acetate, 1-methoxy-2-propyl acetate, 2-methoxyethyl acetate, γ-butyrolactone or γ- or δ-valerolactone; amides like N,N-dimethylformamide, N,N-dimethylacetamide, N-methylpyrrolidone or N-ethylpyrrolidone; sulfoxides like dimethyl sulfoxide; or mixtures of two or more of these aprotic solvents.

Examples of protic solvents include alcohols like n-propanol, 2-propanol, n-butanol, 2-butanol, isobutanol, t-butanol, n-pentanol, 2-pentanol, benzyl alcohol, 1-methoxy-2-propanol or 1-methoxy-2-methyl-2-propanol; or mixtures of two or more of these protic solvents.

Preferred solvents are aromatic hydrocarbons like xylenes or o-xylol; alkyl esters like ethyl acetate, n-butyl acetate or 1-methoxy-2-propylacetate; alcohols like 2-propanol, 2-butanol, 2-pentanol or 1-methoxy-2-propanol; ketones like cyclohexanone or butanone; and any mixture of two or more thereof.

Case (3) further involves a linker L. Herein, the term "linker" denotes a divalent molecular entity that connects two parts of a compound, e.g. PG and X in the context of case (3) of the compound of formula (Ia). Suitably, the "divalent molecular entity" is a chain of successive carbon atoms. Preferably, the chain has 2 to 12 carbon atoms, in particular 2 to 6 carbon atoms. The chain is optionally substituted with 1 to 5 identical or different substituents, independently of one another selected from C₁-C₄ alkyl, cycloalkyl and phenyl-C₁-C₄-alkyl.

The linker may also be a covalent bond meaning that in this case, no molecular entity is present between the two parts of the compound to be connected. In the context of case (3) of the compound of formula (I), the linker being a covalent bond refers to a situation in which PG and X are directly bound.

In an embodiment, M is

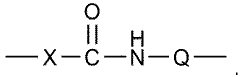

For example, PG may be selected from a (meth)acryloyloxy group and an allyl group. The resulting compound of formula (Ia) may be obtained by reacting the compound of formula (I) with, e.g., a hydroxyalkyl (meth)acrylate such as hydroxymethyl (meth)acrylate or hydroxyethyl (meth)acrylate, or a C₃₊-alkenol such as allyl alcohol or isoprenol. Herein, the designator "Cₓ" refers to a hydrocarbon including x carbon atoms; "Cₓ₊" refers to a hydrocarbon or mixture of hydrocarbons including x or greater carbon atoms.

In an embodiment, PG is an allyl group, L is a bond and X is O.

In a preferred embodiment, PG is a (meth)acryloyloxy group, L is C₂-C₆ alkylene, and X is O.

In an embodiment, M is a chemical bond. The resulting compound of formula (la) may be obtained by reacting the compound of formula (I) with, e.g., a (meth)acryloyloxyalkyl isocyanate, preferably (meth)acryloyloxyethyl isocyanate. In a preferred embodiment, PG is a (meth)acryloyloxy group and L is C₂-C₆ alkylene.

Besides the compound of formula (I), the inventive composition useful as coating, sealant or adhesive, further comprises b) the compound having at least two nucleophilic groups and/or groups being capable of releasing a nucleophilic group, the nucleophilic group being selected from hydroxyl groups, primary amino groups, secondary amino groups, and thiol groups, generally referred to as "hardener" or "crosslinking agent" or "curing compound".

Compound b) having at least two nucleophilic groups selected from hydroxyl groups, primary amino groups, secondary amino groups, and thiol groups may be applied as such.

Alternatively, compound b) may have at least two groups being capable of releasing a nucleophilic group selected from hydroxyl groups, primary amino groups, secondary amino groups, and thiol groups. The term "being capable of releasing" denotes that the compound is in a "capped form" (also referred to as "protected form"). In other words, capped compound b) is a compound in which the hydroxyl groups, primary amino groups, secondary amino groups, and thiol groups are capped with a capping group. From the capped compound b), the capping group may be cleaved off, e.g. via a stimulus such as addition of a catalyst, or a thermal stimulus.

It has been shown that the compounds of formula (I) are capable of reacting with nucleophiles to form covalent bonds. This results the formation of polymers by chain extension and/or crosslinking. The reaction may proceed in various ways. This is summarized in the following scheme:

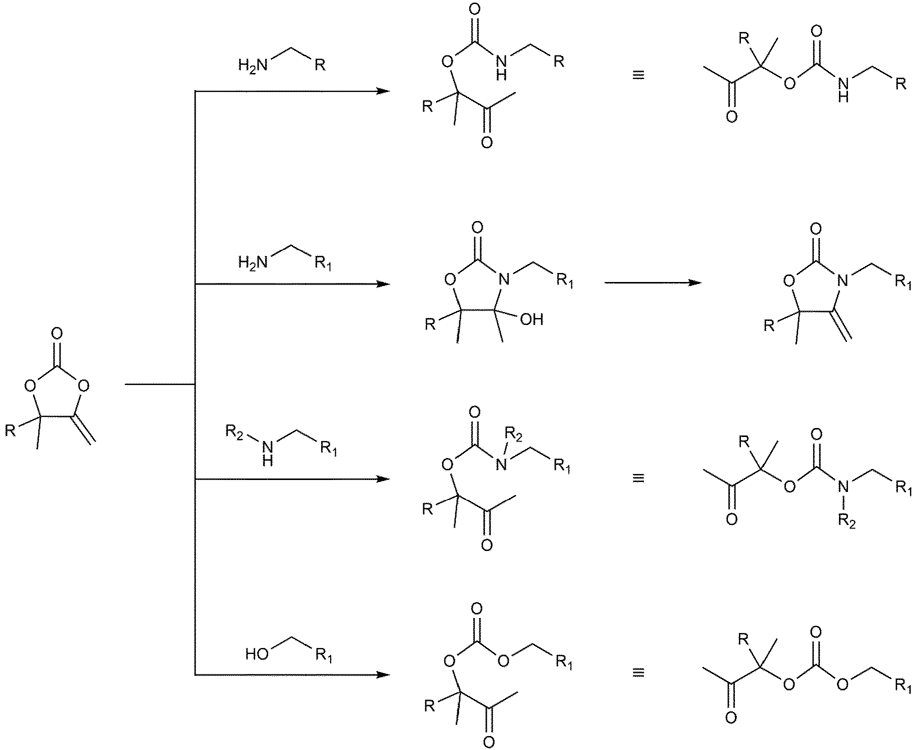

Reaction of the compounds of formula (I) with primary amines can primarily yield vinylene oxazolidinones. Reaction of the compounds of formula (I) with secondary amines can primarily yield carbamates. Reaction of the compounds of formula (I) with alcohols can primarily yield carbonates.

The hardener may be selected from alkanepolyols, intramolecular or intermolecular dehydration products of alkanepolyols, alkoxylation products of alkanepolyols, polyvinyl alcohols and acrylic polyols, polyesterpolyols, polyetherpolyols, and mixtures thereof.

Alkanepolyols and intramolecular or intermolecular dehydration products thereof, preferably C₃-C₈-alkanepolyols and intramolecular or intermolecular dehydration products thereof, include glycerin, 1,2,6-trihydroxyhexane, 1,2,3-butanetriol, 1,2,3-hexanetriol, trimethylolethane, trimethylolpropane, pentaerythritol, sorbitol, sorbitan, 1,2,3-cyclohexanetriol and polyglycerin.

Alkoxylation products of alkanepolyols are reaction products obtained from the reaction of any of the above-mentioned alkanepolyols with alkylene oxides. Suitable alkylene oxides are selected from C₂-C₄ alkylene oxides, preferably ethylene oxide and propylene oxide. The alkoxylation products of alkanepolyols may have an average degree of alkoxylation in the range of from 0.1 to 8, per hydroxyl group. Suitable commercially available alkoxylation products of alkanepolyols are selected from alkoxylated glycerol, alkoxylated pentaerytitol, alkoxylated di-pentaerythritol, alkoxylated sugar derivatives, alkoxylated trimethylolpropane, and alkoxylated trimethylolpropane dimer.

Polyvinyl alcohols suffice the following general formula (A)

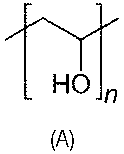

Suitable polyvinyl alcohols are those of formula (A) with n being selected such that the molecular weight of the polyvinyl alcohol is in the range of from 13000 to 130000.

Acrylic polyols (hydroxyl functional acrylic polymer) include copolymers of hydroxyethyl (meth)acrylate and other vinyl monomers.

Polyesterpolyols are known, for example, from Ullmanns Enzyklopädie der technischen Chemie, 4th Edition, Volume 19, pages 62 to 65. Polyesterpolyols may be obtained by reacting dihydric alcohols with dibasic carboxylic acids. For example, polyesterpolyols may be prepared from the above-mentioned polyols with polycarboxylic acids. Non-limiting examples of suitable polycarboxylic acids include phthalic acid, isophthalic acid, terephthalic acid, trimellitic acid, tetrahydrophthalic acid, adipic acid, succinic acid, glutaric acid, fumaric acid, and combinations thereof. Anhydrides of the above polycarboxylic acids can also be employed and are encompassed by the term "polycarboxylic acid". In addition, certain materials which react in a manner similar to acids to form polyesterpolyols can also be used. Non-limiting examples of such materials include lactones, such as caprolactone, propiolactone, and butyrolactone, and hydroxy acids, such as hydroxycaproic acid and dimethylol propionic acid. Moreover, as used herein, the polyesterpolyols can also include polyesterpolyols modified with fatty acids or glyceride oils of fatty acids. The polyesterpolyol can also be prepared by reacting an alkylene oxide, such as ethylene oxide, propylene oxide, and the like, and the glycidyl esters of versatic acid with methacrylic acid to form the corresponding ester. Suitable polyesterpolyols can also include polyester diols such as polycaprolactone diol. Non-limiting examples of commercially available polyesterpolyols include members of the LUPRAPHEN series (available from BASF), members of the DYNACOLL series (available from Evonik Industries) or members of the DESMOPHEN and BAYCOLL series (available from Bayer).

Polyetherpolyols are known per se may be prepared by self-polymerization of epoxides such as ethylene oxide, propylene oxide, butylene oxide or tetrahydrofuran, or by addition of these epoxides, preferably of ethylene oxide and propylene oxide, where appropriate mixed together or separately and consecutively, onto starter components having at least two reactive hydrogen atoms, such as water, ethylene glycol, propylene glycol, diethylene glycol, dipropylene glycol, glycerol, trimethylolpropane, pentaerythritol, sorbitol or sucrose. Representatives of the high molecular weight polyhydroxy compounds mentioned for use are listed for example in High Polymers, Vol. XVI, "Polyurethanes, Chemistry and Technology" (Saunders-Frisch, Interscience Publishers, New York, Vol. 1, 1962, pages 32-42).

The hardener may be a polyamine which may be selected from
- aliphatic diamines or polyamines such as ethylene diamine, 1,2-propane diamine, 1,3-propane diamine, 1,4-butane diamine, 1,3-pentane diamine, 1,5-pentane diamine, 1,6-hexane diamine, 1,8-octane diamine, neopentane diamine, 1,10-decane diamine, 1,12-dodecane diamine, 2-methylpentane-1,5-diamine, N,N'-dimethyl-ethylene diamine, diethylene triamine, triethylene tetraamine, tetraethylene pentamine, pentaethylene hexamine, 2,2-dimethylpropylenediamine, trimethylhexamethylenediamine, 1-(3-aminopropyl)-3-aminopropane, 1,3-bis(3-aminopropyl)propane, 4-ethyl-4-methylamino-1-octylamine, N,N,N-tris-(2-aminoethyl)-amine, N,N,N'-tris-(2-aminoethyl)-ethylene diamine, polyethylene imines, polyvinylamines, polyallylamines, polylysines, iminobis-propylamine, N-(2-aminoethyl)-1,3-propane diamine, tetrapropylene pentamine, tripropylene tetramine, N,N-bis-(6-aminohexyl)-amine, N,N'-bis-(3-aminopropyl)-ethylene diamine, aminoethylethanolamine,
- cycloalkylenediamines or (cyclo)alkylenepolyamines such as cyclohexyldiamines such as 1,2-diaminocyclohexane, 1-methyl-2,4-diaminocyclohexane, 1-methyl-2,6-diaminocyclohexane, 1-amino-3-aminomethyl-3,5,5-trimethylcyclohexane (isophorone diamine), bis-(4-aminocyclohexyl)-methane, bis-(4-amino-3-methylcyclohexyl)-methane, 1,2-bis(aminomethyl)cyclohexane, 1,3-bis(aminomethyl)cyclohexane, 1,4-bis(aminomethyl)cyclohexane, 2,5-bisaminomethyl tetrahydrofuran, 4,4'-diamino-dicyclohexylmethane, 3,3'-dimethyl-4,4'-diamino-dicyclohexylmethane, 3,3',5,5'-tetramethyl-4,4'-diaminodicyclohexylmethane, N-cyclohexylpropylene-1,3-diamine, 4,8-diamino-tricyclo[5.2.1.0]decane, norbornandiamine, menthanediamine, menthenediamine,
- heterocyclic diamines or polyamines such as piperazine, 2,5-dimethyl piperazine, N-(2-piperazinoethyl) ethylene diamine, N,N'-bis-(2-aminoethyl)-piperazine, N-[N-(2-aminoethyl)-2-amino-ethyl]-N'-(2-aminoethyl)-piperazine, N-(2-aminoethyl)-N'-(2-piperazinoethyl)-ethylene diamine, N,N-bis-(2-aminoethyl)-N-(2-piperazinoethyl)-amine, N,N-bis-(2-piperazinoethyl)-amine,
- hydrazine, aminoacid hydrazides, hydrazides of semicarbazido carboxylic acids, bis-hydrazides, bis-semicarbazides,
- guanidine,
- aromatic diamines or polyamines such as melamine, 3,3'-diaminobenzidine, 2,4,6-triaminopyrimidine, 2,4-bis-(4'-aminobenzyl)-aniline, diethyl-toluene diamine isomers, toluene diamine isomers, xylylene diamine isomers, 1,2-phenylene diamine, 1,3-phenylene diamine, 1,4-phenylene diamine, methylene-bis-(phenylamine) isomers such as 4,4'-diamino-diphenylmethane or 4,4'-diaminodiphenylsulfone, 2,5-bisaminomethyl furan, 1,5-naphthalene diamine, aniline, alkyl anilines, toluidine, t-butyl-toluene diamine isomers, methylene-bis-(o-dichloroaniline) (MOCA), 2,4-diaminoalkylbenzene isomers having 8 to 15 carbon atoms in the alkyl chain,
- polyetheramines (alkylene diamines or alkylene polyamines comprising ether groups) such as difunctional and trifunctional primary polyetheramines based on polypropylene glycol, polyethylene glycol, polybutylene oxide, poly-(1,4-butanediol), polytetrahydrofuran (poly-THF) or polypentylene oxide, e.g. 4,7,10-trioxatridecan-1,3-diamine, 4,7,10-trioxatridecan-1,13-diamine, 1,8-diamino-3,6-dioxaoctane (XTJ-504, Huntsman), 1,10-diamino-4,7-dioxadecane (XTJ-590, Huntsman), 1,12-diamino-4,9-dioxadodecane (BASF SE), 1,3-diamino-4,7,10-trioxatridecane (BASF SE), primary polyetheramines based on polypropylene glycol with an average molecular weight of 230, such as Polyetheramine D 230 (BASF SE) or Jeffamine^{®} D 230 (Huntsman), difunctional, primary polyetheramines based on polypropylene glycol with an average molecular weight of 400, e.g. Polyetheramine D 400 (BASF SE) or Jeffamine^{®} XTJ 582 (Huntsman), difunctional, primary polyetheramines based on polypropylene glycol with an average molecular weight of 2000, e.g. Polyetheramine D 2000 (BASF SE) or Jeffamine^{®} XTJ 582 (Huntsman), difunctional, primary polyetheramines based on polypropylene glycol with an average molecular weight of 2000, e.g. Polyetheramine D 2000 (BASF SE) or Jeffamine^{®} XTJ 582 (Huntsman), e.g. Polyetheramine D 2000 (BASF SE), Jeffamine^{®} D2000 or Jeffamine^{®} XTJ 578 (both from Huntsman), difunctional, primary polyetheramines based on propylene oxide with an average molecular weight of 4000, e.g. Polyetheramine D 4000 (BASF SE), trifunctional, primary polyetheramines prepared by reaction of propylene oxide with trimethylolpropane, followed by amination of the terminal OH groups with an average molecular weight of 403, e.g. Polyetheramine T 403 (BASF SE) or Jeffamine^{®} T 403 (Huntsman), trifunctional, primary polyetheramines prepared by reaction of propylene oxide with glycerol, followed by amination of the terminal OH groups with an average molecular weight of 5000 (Huntsman), trifunctional, primary polyetheramine prepared by reaction of propylene oxide with glycerol, followed by amination of the terminal OH groups with an average molecular weight of 5000, such as Polyetheramine T 5000 (BASF SE) or Jeffamine^{®} T 5000 (Huntsman), aliphatic polyetheramines, which are composed of a polyethylene glycol grafted with propylene oxide and have an average molecular weight of 600, such as Jeffamine^{®} ED-600 or Jeffamine^{®} XTJ-501 (Huntsman), aliphatic polyetheramines which are composed of a polyethylene glycol grafted with propylene oxide and have an average molecular weight of 900, such as Jeffamine^{®} ED-900 (Huntsman), aliphatic polyetheramines which are composed of a polyethylene glycol grafted with propylene oxide and have an average molecular weight of 2000, e.g. Jeffamine^{®} ED-2003 (Huntsman), difunctional, primary polyether amines produced by amination of a diethylene glycol grafted with propylene oxide with an average molecular weight of 220, e.g. Jeffamine^{®} HK-511 (Huntsman), aliphatic polyether amines based on a copolymer of poly(tetramethylene ether glycol) and polypropylene glycol with an average molecular weight of 1000 (Huntsman), aliphatic polyether amines based on a copolymer of poly(tetramethylene ether glycol) and polypropylene glycol with an average molecular weight of 1000, such as Jeffamine^{®} XTJ-542 (Huntsman), aliphatic polyether amines based on a copolymer of poly(tetramethylene ether glycol) and polypropylene glycol with an average molecular weight of 1900, such as Jeffamine^{®} XTJ-542 (Huntsman), aliphatic polyether amines based on a copolymer of poly(tetramethylene ether glycol) and polypropylene glycol with an average molecular weight of 1900, such as Jeffamine^{®} XTJ-542 (Huntsman), polyether triamines based on an at least trivalent alcohol grafted with butylene oxide with an average molecular weight of 400, e.g. Jeffamine^{®} XTJ-566 (Huntsman), aliphatic polyether amines produced by amination of alcohols grafted with butylene oxide with an average molecular weight of 219, e.g. Jeffamine^{®} XTJ-568 (Huntsman), polyetheramines based on pentaerythritol and propylene oxide with an average molecular weight of 600, e.g. Jeffamine^{®} XTJ-616 (Huntsman), polyetheramines based on triethylene glycol with an average molecular weight of 148, e.g. Jeffamine^{®} EDR-148 (Huntsman), difunctional, primary polyether amines produced by amination of an ethylene glycol grafted with propylene oxide with an average molecular weight of 176, e.g. Jeffamine^{®} EDR-176 (Huntsman) and polyether amines prepared by amination of polytetrahydrofuran (Poly-THF) with an average molecular weight of 250, e.g. PolyTHF-Amin 350 (BASF SE),
- amino acids with two amino groups such as lysin, ornithin,
- polyamidoamines (amidopolyamines) which are obtainable by the reaction of dimeric fatty acids (e.g. dimeric linoleic acid) with low molecular weight polyamines such as diethylenetriamine, 1-(3-aminopropyl)-3-aminopropane or triethylenetetramine or other diamines such as the aliphatic or cycloaliphatic diamines,
- adducts which are obtainable by reacting amines, in particular diamines, with an admixture of epoxy resin or reactive diluent, preferably using adducts in which about 5 to 20 % of the epoxy groups have been reacted with amines, in particular diamines,
- Mannich bases which are obtained, for example, by condensation of polyamines, preferably diethylenetriamine, triethylenetetramine, isophorone diamine, 2,2,4- or 2,4,4-trimethylhexamethylenediamine, 1,3- and 1,4-bis(aminomethyl)cyclohexane with aldehydes, preferably formaldehyde and mono- or polyhydric phenols with at least one aldehyde-reactive core site, e.g. the various cresols and xylenols, p-tert-butylphenol, resorcinol, 4,4'-dihydroxydiphenylmethane, 4,4'-dihydroxydiphenyl-2,2-propane, preferably phenol.
- and mixtures thereof.

The polyamine may be silane-functionalized.

The hardener may be an alkanolamine. The alkanolamine may be selected from monoalkanolamines, dialkanolamines, trialkanolamines, tetraalkanolamines, or combinations thereof.

Examples of suitable monoalkanolamines include methylethanolamine, ethylethanolamine, methylisopropanolamine, ethylisopropanolamine, methyl-2-hydroxybutylamine, phenylethanolamine, ethanolamine, isopropanolamine, and combinations thereof.

Suitable dialkanolamines include dialkanolamines which include two hydroxy-substituted C₁-C₁₂ alkyl groups (e.g., two hydroxy-substituted C₁-C₈ alkyl groups, or two hydroxy-substituted C₁-C₆ alkyl groups). The two hydroxy-substituted alkyl groups can be branched or linear, and can be of identical or different chemical composition. Examples of suitable dialkanolamines include diethanolamine, diisopropanolamine, ethanolisopropanolamine, ethanol-2-hydroxybutylamine, isopropanol-2-hydroxybutylamine, isopropanol-2-hydroxyhexylamine, ethanol-2-hydroxyhexylamine, and combinations thereof.

Suitable trialkanolamines include trialkanolamines which include three hydroxy-substituted C₁-C₁₂ alkyl groups (e.g., three hydroxy-substituted C₁-C₈ alkyl groups, or three hydroxy-substituted C₁-C₆ alkyl groups). The three hydroxy-substituted alkyl groups can be branched or linear, and can be of identical or different chemical composition. Examples of suitable trialkanolamines include triisopropanolamine (TIPA), triethanolamine, N,N-bis(2-hydroxyethyl)-N-(2-hydroxypropyl)amine (DEIPA). N,N-bis(2-hydroxypropyl)-N-(hydroxyethyl)amine (EDIPA), tris(2-hydroxybutyl)amine, hydroxyethyl di(hydroxypropyl)amine, hydroxypropyl di(hydroxyethyl)amine, tri(hydroxypropyl)amine, hydroxyethyl di(hydroxy-n-butyl)amine, hydroxybutyl di(hydroxypropyl)amine, and combinations thereof.

Exemplary tetraalkanolamines include four hydroxy-substituted C₁-C₁₂ alkyl groups (e.g., four hydroxy-substituted C₁-C₈ alkyl groups, or four hydroxy-substituted C₁-C₆ alkyl groups). A specific example of a tetraalkanolamine is N,N,N',N'-tetrakis(2-hydroxyethyl)ethylendiamine (EDTA-tetrol).

The hardener may be a polythiol. The polythiol may be selected from glycol-bis(2-mercaptoacetate), glycol-bis(3-mercaptopropionate), 1,2-propylene glycol-bis(2-mercaptoacetate), 1,2-propylene glycol-bis(3-mercaptopropionate), 1,3-propylene glycol-bis(2-mercaptoacetate), 1,3-propylene glycol-bis(3-mercaptopropionate), tris(hydroxymethyl)methane-tris(2-mercaptoacetate), tris(hydroxymethyl)methane-tris(3-mercaptopropionate), 1,1,1-tris(hydroxymethyl)ethane-tris(2-mercaptoacetate), 1,1,1-tris(hydroxymethyl)ethane-tris(3-mercaptopropionate), 1,1,1-trimethylolpropane-tris(2-mercaptoacetate), ethoxylated 1,1,1-trimethylolpropane-tris(2-mercaptoacetate), propoxylated 1,1,1-trimethylolpropane-tris(2-mercaptoacetate), 1,1,1-trimethylol propane-tris(3-mercaptopropionate), ethoxylated 1,1,1-trimethylolpropane-tris(3-mercaptopropionate), propoxylated trimethylolpropane-tris(3-mercaptopropionate), 1,1,1-trimethylolpropane-tris(3-mercaptobutyrate), pentaerythritol-tris(2-mercaptoacetate), pentaerythritol-tetrakis(2-mercaptoacetate), pentaerythritol-tris(3-mercaptopropionate), pentaerythritol-tetrakis(3-mercaptopropionate), pentaerythritol-tris(3-mercaptobutyrate), pentaerythritol-tetrakis(3-mercaptobutyrate), Capcure^{®} 3-800, GPM-800 (Gabriel Performance Products), Capcure^{®} LOF, GPM-800LO (Gabriel Performance Products), KarenzMT PE-1 (Showa Denko), 2-ethylhexylthioglycolate, iso-octylthioglycolate, di(n-butyl)thiodiglycolate, glycol-di-3-mercaptopropionate, 1,6-hexanedithiol, ethylene glycol-bis(2-mercaptoacetate) and tetra(ethylene glycol)dithiol.

Preferably, the hardener is selected from polyamines such as polyetheramines; polyols such as alkoxylation products of alkanepolyols or acrylic polyols; polyesterpolyols; polyetherpolyols; and polythiols.

The reaction of the compound of formula (I) with the compound having at least two nucleophilic groups and/or groups being capable of releasing a nucleophilic group, the nucleophilic group being selected from hydroxyl groups, primary amino groups, secondary amino groups, and thiol groups (hardener) may be carried out in the presence of a solvent. Suitable solvents are selected from tetrahydrofuran, γ-valerolactone, ethyl acetate, butyl acetate, propyl propionate, acetone, methyl ethyl ketone, methyl propyl ketone, methyl isoamyl ketone, dichloromethane, toluene, and xylene.

The method for reacting the compound of formula (I) with the hardener is suitably carried out at an essentially equimolar ratio of exo-VC groups of the compound of formula (I) to nucleophilic groups and/or groups being capable of releasing a nucleophilic group of the hardener, or with a molar excess either of the exo-VC groups or of the nucleophilic groups and/or groups being capable of releasing a nucleophilic group. For example, the molar ratio may be in the range of from 1 : 2 to 2 : 1.

The reaction of the compound of formula (I) with the hardener may be carried out at a temperature in the range of from 0 to 120 °C.

The reaction of the compound of formula (I) with the hardener may be carried out in the presence of a catalyst. Suitably, the catalyst is a basic catalyst. Suitable basic catalysts are selected from tertiary amines such as triethylamine, tributylamine, trioctylamine, diethyl cyclohexylamine, N-methyl-morpholine, N-ethyl morpholine, N-octadecyl morpholine (N-cocomorpholine), N-methyl-diethanolamine, N,N- dimethylethanolamine, N,N'-bis(2-hydroxypropyl) piperazine, N,N,N,N'-tetramethylethylene-diamine, N,N,N',N'-tetramethyl-1,3-propanediamine, triethylenediamine (1,4-diazabicyclo[2.2.2]octane), 1,4-bis(2-hydroxypropyl)-2-methylpiperazine, N,N-dimethylbenzylamine, N,N-dimethyl cyclohexylamine, bis(N,N-diethylaminoethyl)adipate, N,N-diethylbenzylamine, N-ethylhexamethyleneamine, N-ethylpiperidine, alpha methyl-benzyldimethylamine, dimethylhexadecylamine, dimethylcetylamine, bis(dimethylaminoethyl)ether, pentamethyl diethylene triamine, 2-N-(dimethylaminoethoxyethyl)-N-methylamino-ethanol, 2,4,6-tris(dimethylaminomethyl)-phenol, and N-methyl imidazole; and amines having primary and tertiary amine groups such as 3-(dimethylamino)-propylamine, 1-(3-aminopropyl)-imidazole, N,N-dimethylethylene diamine, 3-(diethylamino)-propylamine, N-methyl-(N'-aminoethyl)-piperazine and 2-aminoethyl morpholine. In the case of a compound having at least two hydroxyl groups, preference is given to strongly basic, non-nucleophilic catalysts. An especially preferred catalyst is 1,8-diazabicyclo[5.4.0]undec-7-ene (DBU).

The catalyst may also be a latent catalyst. A "latent catalyst" is a catalyst which is not active in its latent form, and which can be activated when used. For example, the latent catalyst may be photolatent catalyst (also referred to as "photoactivatable" catalyst). The photolatent catalyst may be a photolatent sterically hindered amidine, preferably photolatent 1,8-diazabicyclo[5.4.0]undec-7-ene (DBU; see formula B1 below) and/or 1,5-diazabicyclo[4.3.0] non-5-ene (DBN; see formula B2 below). The nitrogen atom bonded twice in the free amidine carries a substituent R. This substituent R may be selected from an alkyl group or a substituted or unsubstituted aryl group.

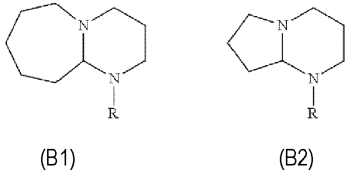

If the photolatent catalyst is subject to actinic radiation, it dissociates into the amidine radical and the radical composed of the substituent group R. The amidine radical absorbs an H atom and transforms to reactive amidine.

The amount of the catalyst may be 0.01 to 10 parts by weight, preferably 0.1 to 5 parts by weight, per 100 parts by weight, based on the sum total weight of a) and b).

The coating, adhesive and/or sealing composition contains the above-described inventive composition comprising a) and b), which may also be referred to as "binder". The coating, adhesive and/or sealing composition may consist exclusively of the composition comprising a) and b) (binder).

The coating, adhesive and/or sealing composition comprises the composition comprising a) and b) of the invention and may additionally comprise further ingredients.

The coating, adhesive and/or sealing composition may additionally comprise a solvent or diluent. The solvent or diluent allows for adjusting viscosity and/or workability of the coating, adhesive and/or sealing composition.

Water and conventional organic solvents which are liquid at 20 °C (1 bar), which do not react with constituents of the coating, adhesive and/or sealing composition, and which are removed on later formation of the coating, adhesive and/or sealing can be used as a solvent. Polar or nonpolar solvents are among solvents contemplated. Preferably, the solvent is selected from ethers; esters; lactones; acetals; ketals; ketones; halogenated hydrocarbons; alkanes; alkenes; and aromatic hydrocarbons.

Exemplary solvents are methylene chloride, trichloroethylene, toluene, xylene, butyl acetate, amyl acetate, isobutyl acetate, methyl isobutyl ketone, methoxybutyl acetate, cyclohexane, cyclohexanone, dichlorobenzene, diethyl ketone, diisobutyl ketone, dioxane, ethyl acetate, ethylene glycol monobutyl ether acetate, ethylene glycol monoethyl acetate, 2-ethylhexyl acetate, glycol diacetate, heptane, hexane, isobutyl acetate, isooctane, isopropyl acetate, methyl ethyl ketone, tetrahydrofuran, tetrachloroethylene, gamma-valerolactone or mixtures of two or more of the recited solvents.

In certain embodiments, the coating, adhesive and/or sealing composition suitably comprises less than 5 wt.-% of water, based on the weight of the composition, and is most preferably an anhydrous composition that is essentially free of water. In other embodiments, the coating, adhesive and/or sealing composition may be provided as an aqueous dispersion.

Some volatile non-aqueous carriers may give rise to VOC (volatile organic compound(s)) emissions from a coating, sealant or adhesive composition either during or after cure. Considerable research has been directed to finding lower-VOC versions of coating, sealant or adhesive systems so as not to contribute additional VOC emissions in the finished product.

To this end, the diluent may be a reactive diluent. A reactive diluent is a molecular species that is a liquid at room temperature and contains reactive sites capable of participating in the hardening reaction.

Preferably, the reactive diluent comprises a 4-methylene-1,3-dioxolan-2-one group. The reactive diluent may be of formula (IV) or of formula (V) 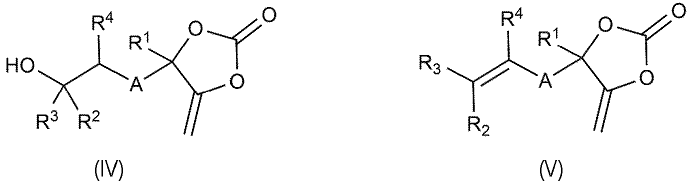 wherein
R¹ is H or methyl,
R² and R³ are independently selected from H, C₁-C₄ alkyl, cycloalkyl and phenyl-C₁-C₄-alkyl, or R² and R³, together with the carbon atom to which they are attached, form a C₃-C₆ carbocycle,
R⁴ is H or C₁-C₄ alkyl, and
A is C₂-C₇-alkylene.

Preferably, the reactive diluent is of formula (V) as shown above.

In particular, the reactive diluent may be

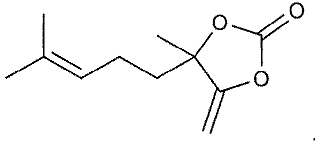

The coating, adhesive and/or sealing composition may comprise a further constituent, preferably being selected from additives including catalysts; antioxidants; UV absorbers/light stabilizers; metal deactivators; antistatic agents; reinforcers; fillers; antifogging agents; propellants; biocides; plasticizers; lubricants; emulsifiers; colorants; dyes; pigments; rheological agents; impact modifiers; adhesion regulators; optical brighteners; flame retardants; anti-drip agents; nucleating agents; wetting agents; thickeners; protective colloids; defoamers; and, mixtures thereof.

The selection of suitable conventional additives for the coating, adhesive and/or sealing composition depends on the specific intended use of the coating, adhesive and/or sealing composition and can be determined in the individual case by the skilled person.

Suitable fillers which may be included in the coating, adhesive and/or sealing composition can be organic or inorganic in nature. Inorganic fillers may be selected from carbon black, carbon fibers, glass fibers, calcium carbonate, and titanium dioxide. Further suitable inorganic fillers may be selected from highly dispersed silicas, especially pyrogenic silicas or precipitated silicas due to their thixotropic effect. These examples aside, it is preferred that inorganic fillers are present in the form of platelets, which can be aligned to form layers with an intensified barrier effect in regard to fluids and gases. Phyllosilicates such as montmorillonite and hectorite provide examples thereof.

Where employed in the coating, adhesive and/or sealing composition, light stabilizers / UV absorbers, antioxidants and metal deactivators should preferably have a high migration stability and temperature resistance. They may suitable be selected, for example, from the groups a) to t) listed below, of which the compounds of groups a) to g) and i) represent light stabilizers/UV absorbers and compounds j) to t) act as stabilizers: a) 4,4-diarylbutadienes; b) cinnamic acid esters; c) benzotriazoles; d) hydroxybenzophenones; e) diphenyl cyanoacrylates; f) oxamides; g) 2-phenyl-1,3,5-triazines; h) antioxidants; i) nickel compounds; j) sterically hindered amines; k) metal deactivators; I) phosphites and phosphonites; m) hydroxylamines; n) nitrones; o) amine oxides; p) benzofuranones and indolinones; q) thiosynergists; r) peroxide-destroying compounds; s) polyamide stabilizers; and t) basic co-stabilizers.

In an embodiment, the composition is an adhesive and/or sealing composition.

Generally, an adhesive composition is used to bond two materials together in a permanent way.

Generally, a sealing composition is a substance used to block the passage of fluids through openings in materials. Sealing compositions also serve the purpose of blocking dust, sound and heat transmission. Sealing compositions may be weak or strong, flexible or rigid, permanent or temporary. Typical applications include window sealings, construction, automotive aerospace, electronics, and piping.

Examples of customary auxiliaries in an adhesive and/or sealing composition are tackifying resins (tackifiers). Suitable tackifiers include any compatible resins or mixtures thereof such as (1) natural or modified rosins such as gum rosin, wood rosin, tall-oil rosin, distilled rosin, hydrogenated rosin, dimerized rosin, and polymerized rosin; (2) glycerol and pentaerythritol esters of natural or modified rosins, such as the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; (3) copolymers and terpolymers of natural terpenes, e.g., styrene/terpene and alpha methyl styrene/terpene; (4) polyterpene resins having a softening point, as determined by ASTM method E28-58T, of from about 80 to 150 °C; the latter polyterpene resins generally resulting from the polymerization of terpene hydrocarbons, such as the bicyclic monoterpene known as pinene, in the presence of Friedel-Crafts catalysts at moderately low temperatures; also included are the hydrogenated polyterpene resins; (5) phenolic modified terpene resins and hydrogenated derivatives thereof, for example, as the resin product resulting from the condensation, in an acidic medium, of a bicyclic terpene and phenol; (6) aliphatic petroleum hydrocarbon resins having a Ball and Ring softening point of from about 70 to 135 °C according to ISO 4625-1-2004; the latter resins resulting from the polymerization of monomers consisting of primarily of olefins and diolefins; also included are the hydrogenated aliphatic petroleum hydrocarbon resins; (7) alicyclic petroleum hydrocarbon resins and the hydrogenated derivatives thereof; (8) aliphatic/aromatic or cycloaliphatic/aromatic copolymers and their hydrogenated derivatives; and (9) aromatic resins.

In an embodiment, the composition is a coating composition.

Generally, a coating composition is a fluid that forms a solid, continuous, adherent film or barrier by physical or chemical means when applied to a surface. Said film is designed to enhance, beautify, or protect the surface to which it has been applied.

The composition may also be useful for sizing. Thus, in an embodiment, the composition is a sizing composition (also referred to as "sizing agent").

Generally, sizing involves applying a sizing agent to a material, e.g. a fibrous material such as paper or textile. The sizing agent acts as a protective filler or glaze. Sizing is used to change the absorption and wear characteristics of the material, e.g. of the fibrous material.

The composition may also be useful for additive manufacturing such as 3D printing. Thus, in an embodiment, the composition is an additive manufacturing composition.

Generally, additive manufacturing such as 3D printing involves the construction of a three-dimensional object, typically from a CAD model or a digital 3D model. It can be done in a variety of processes in which material is deposited, joined or solidified with the material being added together, typically layer by layer. The inventive composition may be a suitable material to be used in additive manufacturing.

The exo-VC containing composition of the invention, especially a composition comprising a)-(I) + b), a)-(I') + b) or a)-(I) + a)-(I') + b), wherein a)-(I), a)-(I') and b) are as described above, with b) being a polyamine, allow for fast curing. Therefore, the composition may also be useful as a chemical resin. Thus, in an embodiment, the composition is a reactive resin mortar composition.

Generally, the term "reactive resin mortar" denotes a mixture of a resin mixture and inorganic additives. In the context herein, the term "reactive resin mortar" denotes a mixture of the composition according to the invention and at least one inorganic additive.

The inorganic additive may be selected from a filler and/or other conventional additives. Suitable fillers are conventional fillers, preferably mineral or mineral-like fillers, such as quartz, glass, sand, quartz sand, quartz meal, porcelain, corundum, ceramics, talc, silica (e.g., pyrogenic silica), silicates, clay, titanium dioxide, chalk, barite, feldspar, basalt, aluminum hydroxide, granite or sandstone, polymeric fillers such as thermosetting plastics, hydraulically curable fillers such as gypsum, quicklime or cement (e.g., alumina cement or Portland cement), metals such as aluminum, carbon black, also wood, mineral or organic fibers or the like or mixtures of two or more thereof which may be added in the form of a powder, granules or molded bodies.

Such reactive resin mortar compositions are, for example, used in the construction field, for example, for maintaining concrete, as polymer concrete, or as a cold-curing road marking. They are especially suitable for chemical fixing and fastening of anchoring elements such as (chemical) anchors, rebar, screws and bolts and the like, e.g., in boreholes, in particular in boreholes in different substrates, in particular mineral substrates such as those based on concrete, porous concrete, brickwork, lime sandstone, sandstone, natural rock and the like.

The invention further relates to a one-part or multiple-part composition useful as coating, sealant, adhesive, reactive resin mortar, for sizing, and/or for additive manufacturing,
comprising a)-(I'), a)-(I), or a)-(I) + a)-(I') in a first part, and comprising b) in the first or a second part, with the proviso that b) is a polyol if comprised in the first part,
wherein a)-(I), a)-(I') and b) are as defined above.

All definitions as outlined above apply analogously for the further aspect of the invention relating to the one-part or multiple-part composition.

Curing the one-part or multiple-part composition may require addition of a catalyst. In the one-part composition, a catalyst (also referred to as "curing catalyst") may be comprised. In the multiple-part composition, the curing catalyst may be comprised in the first part, the second part, and/or in a further part, e.g. a third part.

Suitably, the catalyst is a basic catalyst. Suitable basic catalysts are selected from tertiary amines such as triethylamine, tributylamine, trioctylamine, diethyl cyclohexylamine, N-methyl-morpholine, N-ethyl morpholine, N-octadecyl morpholine (N-cocomorpholine), N-methyl-diethanolamine, N,N- dimethylethanolamine, N,N'-bis(2-hydroxypropyl) piperazine, N,N,N,N'-tetramethylethylene-diamine, N,N,N',N'-tetramethyl-1,3-propanediamine, triethylenediamine (1,4-diazabicyclo[2.2.2]octane), 1,4-bis(2-hydroxypropyl)-2-methylpiperazine, N,N-dimethylbenzylamine, N,N-dimethyl cyclohexylamine, bis(N,N-diethylaminoethyl)adipate, N,N-diethylbenzylamine, N-ethylhexamethyleneamine, N-ethylpiperidine, alpha methyl-benzyldimethylamine, dimethylhexadecylamine, dimethylcetylamine, bis(dimethylaminoethyl)ether, pentamethyl diethylene triamine, 2-N-(dimethylaminoethoxyethyl)-N-methylamino-ethanol, 2,4,6-tris(dimethylaminomethyl)-phenol, and N-methyl imidazole; and amines having primary and tertiary amine groups such as 3-(dimethylamino)-propylamine, 1-(3-aminopropyl)-imidazole, N,N-dimethylethylene diamine, 3-(diethylamino)-propylamine, N-methyl-(N'-aminoethyl)-piperazine and 2-aminoethyl morpholine. In the case of a compound having at least two hydroxyl groups, preference is given to strongly basic, non-nucleophilic catalysts. An especially preferred catalyst is 1,8-diazabicyclo[5.4.0]undec-7-ene (DBU). The amount of the catalyst may be 0.01 to 10 parts by weight, preferably 0.1 to 5 parts by weight, per 100 parts by weight, based on the sum total weight of a) and b).

The compound of formula (I) and polyols are compatible in a sense that they do not react spontaneously but only upon a stimulus, e.g. the addition of a catalyst (curing catalyst) or a thermal stimulus. Thus, as outlined above, b) is a polyol if comprised in the first part. Suitably, in this case, the curing catalyst constitutes the second part.

Compatibility can be increased by adding a stabilizer, e.g. an acidic stabilizer.

A composition comprising b) being a polyol can therefor also be provided as a one-part composition. Such a one-part composition is activated, e.g. by a addition of a catalyst. For example, the catalyst may be added shortly before use. If the catalyst is a latent catalyst, it may be contained in the mixture earlier. A "latent catalyst" is a catalyst which is not active in its latent form, and which can be activated when used. Suitable latent catalysts are described in detail above. For example, the latent catalyst may be photoactivatable 1,8-diazabicyclo[5.4.0]undec-7-ene (DBU).

The one-part or multiple-part composition can comprise (cat. = catalyst):

| first part | second part | optionally, in first and/or second part |
|---|---|---|
| a)-(I') + latent cat. | --- ^{[1]} | --- ^{[1]} |
| a)-(I) + a)-(I') + latent cat. | --- ^{[1]} | --- ^{[1]} |
| a)-(I) + b) being a polyol + latent cat. | --- ^{[1]} | --- ^{[1]} |
| a)-(I') + b) being a polyol + latent cat. | --- ^{[1]} | --- ^{[1]} |
| a)-(I) + a)-(I') + b) being a polyol + latent cat. | --- ^{[1]} | --- ^{[1]} |
| a)-(I') | curing cat. | --- |
| a)-(I) | b) | curing cat. |
| a)-(I') | b) | curing cat. |
| a)-(I) + a)-(I') | b) | curing cat. |
| a)-(I) + b) being a polyol | curing cat. | --- |
| a)-(I') + b) being a polyol | curing cat. | --- |
| a)-(I) + a)-(I') + b) being a polyol | curing cat. | --- |

| | | |
|---|---|---|
| [1] one-part composition | | |

Selective activation may be accomplished by selective deposition of a catalyst on a selected area such as a surface of a substrate, a groove, a gap, a channel, a joint or along an edge or a transition. The one component composition is applied onto the selected area. In other words, in this embodiment, the catalyst and the one component composition are brought into contact on the selected area.

The invention further relates to a method for bonding a first substrate and at least one further substrate. The method comprises
providing a composition as described above,
applying the composition to a surface of the first substrate,
contacting the surface to which the composition has been applied of the first substrate with a surface of the at least one further substrate, and
allowing the composition to cure.

The invention further relates to a method for providing a sealing joint, the method comprising
providing a composition as described above,
introducing or applying the composition into a groove, a gap, a channel, a joint or along an edge or a transition, and
allowing the composition to cure.

The invention further relates to a method for coating a surface of a substrate. The method comprises providing a composition as described above,
applying the composition to a surface of the substrate, and
allowing the composition to cure.

Suitable substrates in the above methods include substrates of metal, plastic, wood, ceramic, stone, textile, leather, glass, and also fiber composites, glass fibers, glass wool and rock wool, minerals, and construction materials such as plasterboard panels, cement fiberboard panels, or roofing shingles.

In the above methods, the compositions may applied by conventional application methods such as: brushing; roll coating using, for example, a 4-application roll equipment where the composition is solvent-free or a 2-application roll equipment for solvent-containing compositions; doctor-blade application; printing methods; powder coating methods; and, spraying methods, including air-atomized spray, air-assisted spray, airless spray and high-volume low-pressure spray.

The invention is illustrated by the examples that follow.

### Examples

### Methods

Thin-layer chromatography (TLC) was performed on precoated plates (silica gel 60, F₂₅₄). The plates were evaluated under UV light (254 nm) or by staining with basic KMnO₄ followed by heating.

For flash column chromatographic purification silica gel 60 (40 - 63 µm) was used. If not otherwise stated, cyclohexane and ethyl acetate were used as eluent system.

NMR spectroscopic spectra were recorded using multiple devices including Bruker Avance 300, Bruker Avance II 400, Bruker Avance Neo 400 and Bruker Avance III HD 300. ¹H NMR spectra were measured at 300 MHz or 400 MHz and ¹³C NMR spectra at 75 MHz or 100 MHz.

The chemical shifts are given in ppm, relative to the solvent signal, whereas coupling constants J are reported in Hz. The multiplicities found are abbreviated according to the standard notation. If not otherwise stated, the measurements were performed at 300 K.

For high-resolution mass spectroscopy (HRMS), multiple devices were used, including Thermo Scientific Exactive, Agilent 6545 LC/Q-TOF and Agilent 6546 LC/Q-TOF with ESI or APCI ionization.

IR spectrometry was performed on an Agilent Technologies Cary 630 FTIR using FTIR. The found peaks were classified according to their relative strength as weak (w), medium (m) and strong (s).

TGA and DSC measurements were performed on a STA409 from Netsch Gerätebau GmbH.

### I. 4-(4-hydroxy-4-methylpentyl)-4-methyl-5-methylene-1,3-dioxolan-2-one

### Step 1: Preparation of 2,6-dimethyloct-7-yne-2,6-diol

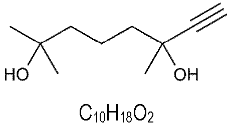

In a 250 mL round-bottomed flask, 90 mL of H₂O were mixed with 20 mL of conc. H₂SO₄ to obtain a 29% H₂SO₄ solution. To this, dehyrolinalool (40 mL, 231.2 mmol, 1.0 equiv.) were added in one portion, followed by vigorous stirring at room temperature for 6 days. A dark-brownish solution was obtained. The reaction mixture was extracted with diethylether (3 x 150 mL). The combined organic layers were washed with 3M NaOH (100 mL), saturated NaHCO₃ (100 mL), dried over Na₂SO₄ and concentrated in vacuum. A crude product was received as a brown oil. Vacuum distillation (1 mbar, 85-120 °C) afforded the product along with some starting material-containing mixed fractions. The product was obtained as a yellow oil in 40% yield (15.77 g, 92.6 mmol). ¹H NMR (300 MHz, CDCl₃): δ 2.92 (s, 1H), 2.40 (s, 1H), 1.84 (s, 1H), 1.68 - 1.46 (m, 6H), 1.45 (s, 3H), 1.19 (s, 6H).
¹³C{¹H} NMR (75 MHz, CDCl₃): δ 88.0, 71.4, 71.3, 67.9, 43.8, 43.7, 29.9, 29.3, 19.5.
GC MS (TG70eV-TG-for monomers 50-1000_9min): 3.10-3.15 min
GC MS (TG70eV-TG-for monomers 50-1000_15min): 3.10-3.15 min
R_{f} (isohexane/EtOAc 1:1) = 0.40 [KMnO₄]
HRMS (APCI): [m/z] calculated for C₁₀H₁₈O₂H+ ([M+H]+): 171.1380; found: 171.1380.

### Step 2: Preparation of 4-(4-hydroxy-4-methylpentyl)-4-methyl-5-methylene-1,3-dioxolan-2-one

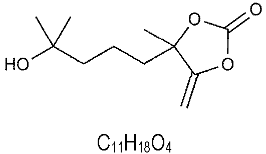

To a solution of 2,6-dimethyloct-7-yne-2,6-diol (15.2 g, 89.3 mmol) in CH₃CN (120 mL), DavePhos (1.76 g, 4.46 mmol) and AgOAc (0.75 g, 4.5 mmol) was added and the solution was charged to a steel autoclave under atmospheric conditions. The equipment was sealed, the reaction mixture was pressurized with CO₂ (20 bar) and stirred at room temperature. After 18 hours, CO₂ overpressure was carefully released. SiO₂ (30 g) was added to the reaction mixture and it was filtrated by glass filter, and then washed with CH₃CN. The solvent was removed under reduced pressure to give the product (17.4 g, 91%, GC: >99% pure). The purity can be improved by distillation (bp: 110-130 °C, 0.2 mbar).

¹H NMR (300 MHz, CDCl₃): δ 4.79 (d, *J* = 3.9 Hz, 1H), 4.27 (d, *J* = 3.9 Hz, 1H), 1.91 -1.79 (m, 1H), 1.77 -1.64 (m, 1H), 1.57 (s, 3H), 1.48 - 1.43 (m, 3H), 1.39 (s, 1H), 1.19 (s, 6H).

¹³C{¹H} NMR (75 MHz, CDCl₃): δ 157.7, 151.6, 87.3, 85.8, 70.8, 43.3, 40.8, 29.5, 26.4, 18.0.
R_{f} (isohexane/EtOAc; 1:1) = 0.32 [KMnO₄]
HRMS (APCI): [m/z] calculated for C₁₀H₁₈O₄NH₄⁺ ([M+NH₄]⁺): 232.1543; found: 232.1544.
Melting Point: ~60°C (±5 °C)

### II. Compound(s) of formula (I)

### Preparation of bis(2-methyl-5-(4-methyl-5-methylene-2-oxo-1,3-dioxolan-4-yl)pentan-2-yl)hexane-1,6-diyldi-carbamate (also referred to as "HDI-eVC")

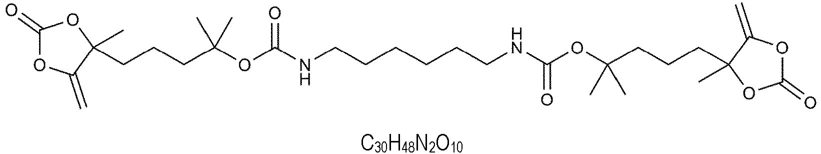

In a 10 mL vial, 4-(4-hydroxy-4-methylpentyl)-4-methyl-5-methylene-1,3-dioxolan-2-one (2.14 g, 9.99 mmol, 2.0 equiv.) was dissolved in THF (5 mL). While stirring at 50 °C, dibutyltin dilaurate (60 µL, 0.1 mmol, 2 mol-%) was added to the clear solution. Afterwards, hexamethylenedisocyanate (800 µL, 5.0 mmol, 1.0 equiv.) was added in one portion. Stirring was continued at 50 °C for 2 h, followed by addition of H₂O (10 mL). Then, while stirring, the reaction solution was allowed to cool to room temperature. The reaction solution was extracted with CH₂Cl₂ (3 x 30 mL). The combined organic layers were dried over Na₂SO₄ and concentrated in vacuum. The raw product was received as a slightly yellowish, medium-viscous oil in 99% solvent-corrected yield (2.95 g, 4.95 mmol, containing THF and CH₂Cl₂ as solvent impurities).

¹H NMR (300 MHz, CDCl₃): δ 4.79 (d, *J =* 3.9 Hz, 2H), 4.61 (t, *J =* 5.9 Hz, 2H), 4.26 (d, *J =* 3.9 Hz, 2H), 3.08 (q, *J =* 6.7 Hz, 4H), 1.83 - 1.67 (m, 8H), 1.57 (s, 6H), 1.51 - 1.40 (m, 6H), 1.39 (s, 12H), 1.31 (p, *J* = 3.5 Hz, 6H). ¹³C{¹H} NMR (75 MHz, CDCl₃): δ 157.8, 155.9, 151.6, 87.3, 85.7, 80.6, 40.6, 40.6, 30.1, 26.6, 26.5, 26.4, 17.7.
R_{f} (EtOAc) = 0.17 [KMnO₄]
HRMS (ESI): [m/z] calculated for C₃₀H₄₈N₂O₁₀Na⁺ ([M+Na]+): 619.3201; found: 619.3209.
HRMS (ESI): [m/z] calculated for C₃₀H₄₈N₂O₁₀Cl⁻ ([M+Cl]⁻): 631.3003; found: 631.3020.

### Preparation of 2-methyl-5-(4-methyl-5-methylene-2-oxo-1,3-dioxolan-4-yl)pentan-2-yl (3,3,5-trimethyl-5-(((((2-methyl-5-(4-methyl-5-methylene-2-oxo-1,3-dioxolan-4-yl)pentan-2-yl)oxy)carbonyl)amino)methyl)cyclo-hexyl)carbamate

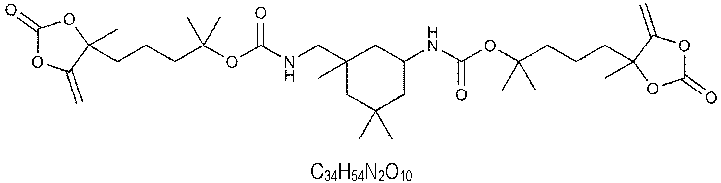

In a 10 mL vial, 4-(4-hydroxy-4-methylpentyl)-4-methyl-5-methylene-1,3-dioxolan-2-one (214 mg, 1.0 mmol, 2.0 equiv.) was dissolved in a solution of dibutyltin dilaurate (0.3 µL, 0.0005 mmol, 0.1 mol-%) in THF (0.5 mL). Afterwards, IPDI (106 µL, 0.5 mmol, 1.0 equiv.) was added in one portion. Stirring was continued at 50 °C for 4 h, followed by addition of H₂O (10 mL) and stirring for 5 min. Afterwards, the reaction solution was extracted with CH₂Cl₂ (3 x 20 mL). The combined organic layers were dried over Na₂SO₄ and concentrated in vacuum to give the titled product as a mixture of isomers and was obtained as a highly-viscous, colorless oil in 82% yield (266 mg, 0.41 mmol).

¹³C{¹H} NMR (75 MHz, DMSO-d₆): δ 157.6, 155.0, 151.5, 87.3, 85.7, 70.6, 46.7, 46.1, 44.1, 43.2, 40.8, 40.5, 36.5, 35.0, 31.8, 29.3, 29.3, 27.6, 26.4, 26.3, 25.6, 23.3, 18.0, 17.6.

Due to the isomeric product mixture, the peak assignment might be inaccurate.

HRMS (APCI): [m/z] calculated for C₃₄H₅₄N₂O₁₀H+ ([M+H]+): 651.3851; found: 651.3852.

HRMS (APCI): [m/z] calculated for C₃₄H₅₄N₂O₁₀NH₄+ ([M+NH₄]⁺): 668.4117; found: 668.4116.

HRMS (APCI): [m/z] calculated for C₃₄H₅₄N₂O₁₀Cl⁻ ([M-Cl]⁻): 685.3472; found: 685.3472.

HRMS (ESI): [m/z] calculated for C₃₄H₅₄N₂O₁₀N₈+ ([M+Na]+): 673.3671; found: 673.3677.

### Conversion of 4-(4-hydroxy-4-methylpentyl)-4-methyl-5-methylene-1,3-dioxolan-2-one with HDI to yield a compound referred to as "HDI-eVC-trimer"

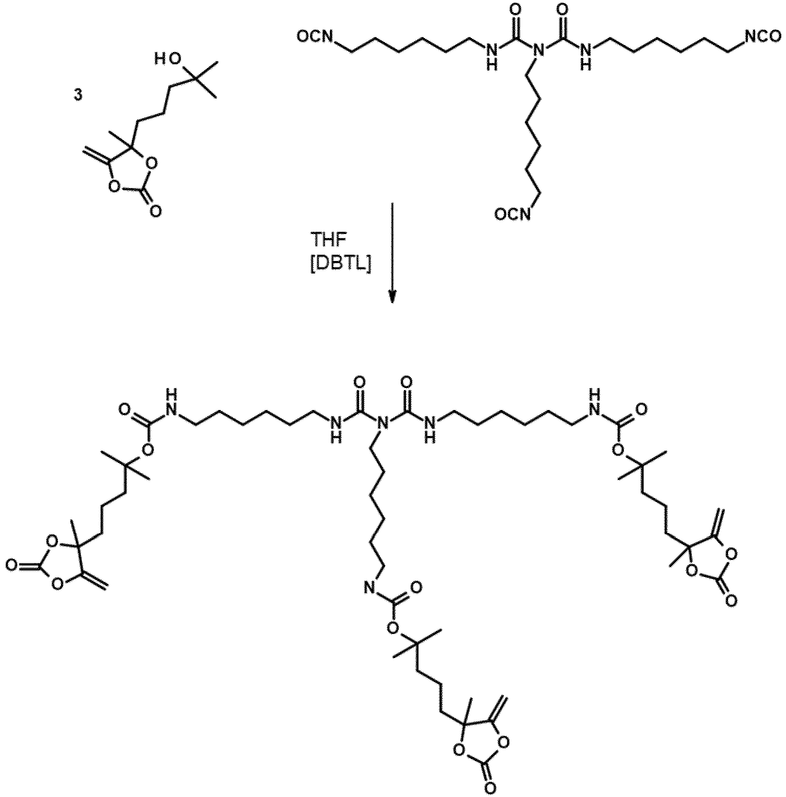

To 80 g of THF, 4-(4-hydroxy-4-methylpentyl)-4-methyl-5-methylene-1,3-dioxolan-2-one (40 g, 187 mmol) and dibutyltin dilaurate (DBTL; 2.36 g, 3,7 mmol) were added, followed by addition of Basonat HI2000 NG (41 g). The reaction mixture was stirred under Ar at 50 °C for 3 h, followed by stirring over night at room temperature. The reaction mixture was filtered over silica and concentrated in vacuum. A pale yellow resin is obtained which is solid at RT.

¹³C NMR confirmed complete conversion of 4-(4-hydroxy-4-methylpentyl)-4-methyl-5-methylene-1,3-dioxolan-2-one via shift of the signal of the R-**C**(Me)₂-OH [70.8] by the signal for -O-**C**(Me)₂-R [80.4].

¹³C{¹H} NMR (125 MHz, CDCl₃): δ 157.8, 155.7, 151.5, 149.0, 87.1, 85.6, 80.4, 40.3, 29.7, 26.4, 26.3, 26.1, 17.5, 17.1.

### Conversion of 4-(4-hydroxy-4-methylpentyl)-4-methyl-5-methylene-1,3-dioxolan-2-one with IPDI and neopentyl glycol

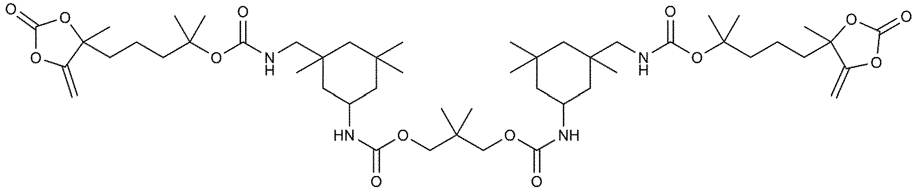

In a 20 mL vial, 4-(4-hydroxy-4-methylpentyl)-4-methyl-5-methylene-1,3-dioxolan-2-one (1.07 g, 5 mmol, 2.0 equiv.) was dissolved in THF (5 mL). Dibutyltin dilaurate (60 µL, 0.1 mmol, 2 mol%) and isophorone diisocyanate (1.06 mL, 5 mmol, 2.0 equiv.) were added and the reaction mixture was stirred at 50 °C for 2 h. Then, neopentyl glycol (260.6 mg, 2.5 mmol, 1.0 equiv.), dissolved in 1 mL of 1,4-dioxane, was added and stirring was continued at 50 °C for 2 h. Afterwards, H₂O (10 mL) was added and, while stirring, the reaction mixture was allowed to cool down to room temperature. The reaction solution was extracted with CH₂Cl₂ (4 x 10 mL). The combined organic layers were dried over Na₂SO₄ and concentrated in vacuum. The product was received as a white foam that was crushed to give a white powder.

HRMS (ESI): [m/z] calculated for C₅₁H₈₄N₄O₁₄H⁺ ([M+H]+): 977.6057; found: 977.6057.

HRMS (ESI): [m/z] calculated for C₅₁H₈₄N₄O₁₄NH₄⁺ ([M+NH₄]⁺): 994.6322; found: 994.6323.

### Conversion of 4-(4-hydroxy-4-methylpentyl)-4-methyl-5-methylene-1,3-dioxolan-2-one with IPDI and trimethylolpropanethoxylat (MW 170)

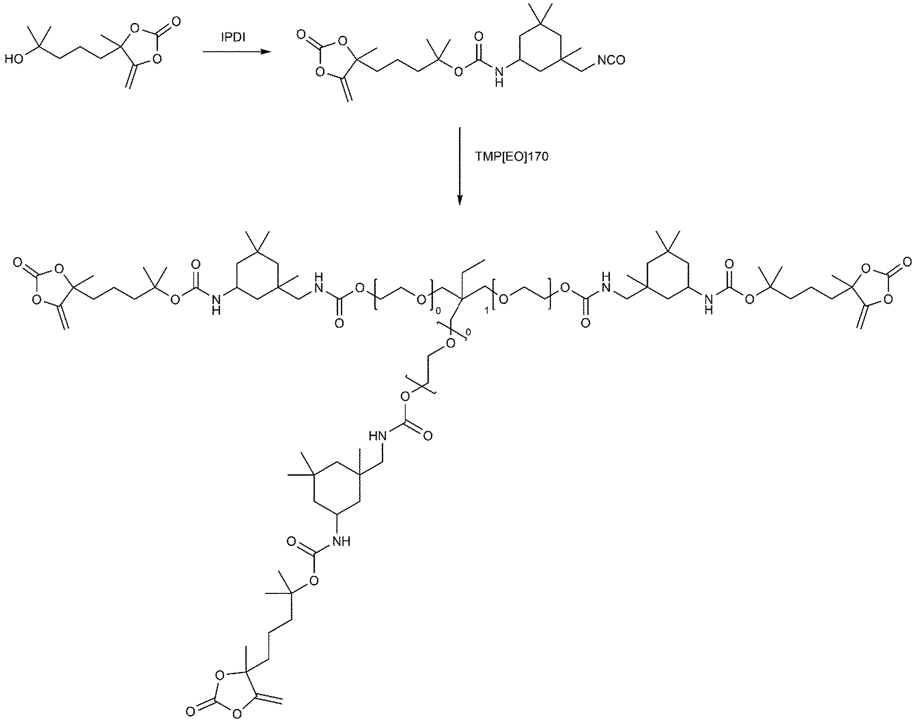

In a 25 mL round-bottomed flask, 4-(4-hydroxy-4-methylpentyl)-4-methyl-5-methylene-1,3-dioxolan-2-one (1.07 g, 5 mmol, 1.0 equiv.) was dissolved in THF (5 mL) and dibutyltin dilaurate (60 µL, 0.1 mmol, 2 mol%) was added, followed by addition of isophorone diisocyanate (1.06 mL, 5 mmol, 1.0 equiv.). The reaction mixture was stirred at 50 °C for 2 h. Then, TMP-ethoxylate (Mₙ ~ 170 g/mol, 283 mg, 1.66 mmol, 0.33 equiv.) dissolved in ~5 mL THF was added. The reaction mixture was stirred at 50 °C for 2 h. Afterwards, activated charcoal (tip of spatula) was added and the reaction mixture was filtered through a plug of SiO₂. After concentration, the product was received as a white foam that was crushed to give a white powder. NMR analysis showed traces of remaining ISO-groups.

### Conversion of 4-(4-hydroxy-4-methylpentyl)-4-methyl-5-methylene-1,3-dioxolan-2-one with IPDI and trimethylolpropanethoxylat (MW 1014) to yield a compound referred to as "IPDI-eVC-TMP[EO] adduct"

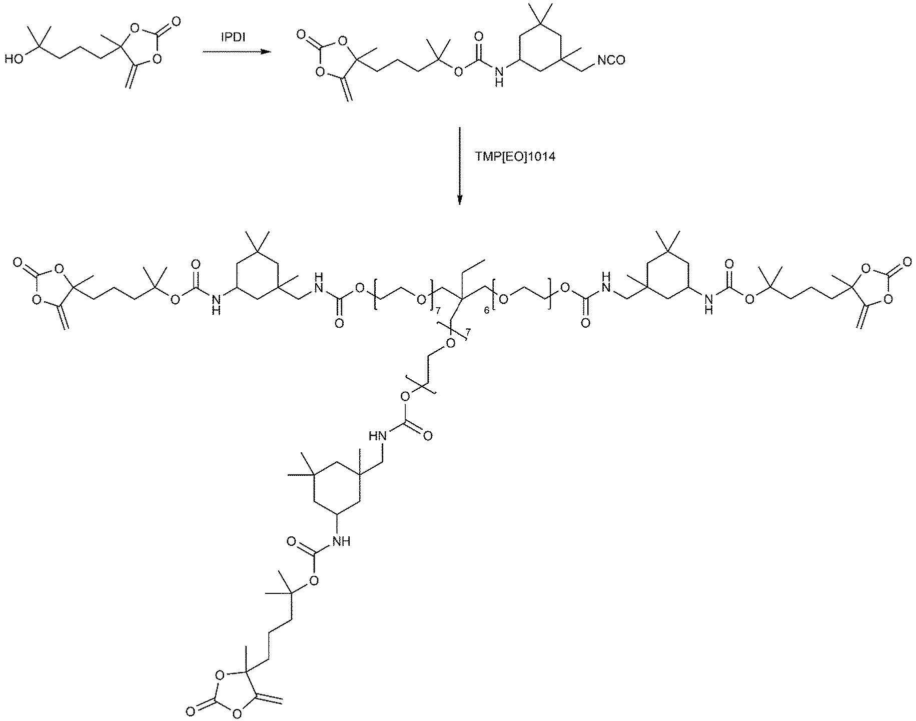

In a 250 mL round-bottomed flask, 4-(4-hydroxy-4-methylpentyl)-4-methyl-5-methylene-1,3-dioxolan-2-one (10.7 g, 50 mmol, 1.0 equiv.) was dissolved in THF (50 mL) and dibutyltin dilaurate (600 µL, 1 mmol, 2 mol%) was added, followed by addition of isophorone diisocyanate (11.1 g, 50 mmol, 1.0 equiv.). The reaction mixture was stirred at 50 °C for 3 h. Then, TMP-ethoxylate (Mₙ ~ 1014 g/mol, 17.1 g, 16.8 mmol, 0.34 equiv.) dissolved in ~150 mL THF was added. The reaction mixture was stirred at 50 °C over the weekend (3 days) and afterwards filtered through a plug of SiO₂ using MeCN as solvent. After concentration, the product was received as a highly-viscous, slightly yellowish oil. NMR analysis showed no more presence of remaining ISO-groups.

Titration with N,N-dibutylamine confirmed the presence of 2.6 functional groups per molecule, which is in good agreement with the expected product.

### III. Model reactions

Bis(2-methyl-5-(4-methyl-5-methylene-2-oxo-1,3-dioxolan-4-yl)pentan-2-yl)hexane-1,6-diyldicarbamate was reacted with a primary amine (n-butylamine) and a secondary amine (pyrrolidine) in model reactions.

### Reaction with n-butvlamine

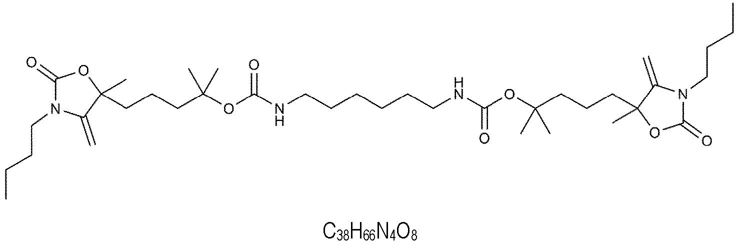

To bis(2-methyl-5-(4-methyl-5-methylene-2-oxo-1,3-dioxolan-4-yl)pentan-2-yl)hexane-1,6-diyldicarbamate, 1 mL of n-butylamine was added. The reaction mixture was stirred at room temperature for 4 h. Then, CH₂Cl₂ (20 mL) was added, followed by extracting with 1M HCl (3 x 30 mL). The organic layer was dried over Na₂SO₄ and concentrated in vacuum to give the product as a highly viscous, colorless oil.

¹³C{¹H} NMR (75 MHz, DMSO-d6): δ 157.0, 155.4, 151.0, 87.5, 86.0, 79.0, 30.1, 29.5, 26.4, 26.1, 26.1, 26.0, 25.5, 17.2.

HRMS (ESI): [m/z] calculated for C₃₈H₆₆N₄O₈Na+ ([M+Na]+): 729.4773; found: 729.4785.

### Reaction with pyrrolidine

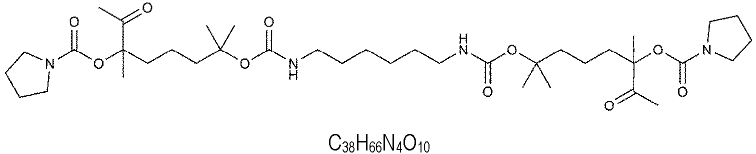

To bis(2-methyl-5-(4-methyl-5-methylene-2-oxo-1,3-dioxolan-4-yl)pentan-2-yl)hexane-1,6-diyldicarbamate, 1 mL of pyrrolidine was added. The reaction mixture was stirred at room temperature for 4 h. A yellow reaction mixture was obtained. After 4 h, CH₂Cl₂ (20 mL) was added, followed by extracting with 1M HCl (3 x 30 mL). The organic layer was dried over Na₂SO₄ and concentrated in vacuum to give the product as a highly viscous, yellowish oil.

¹³C{¹H} NMR (75 MHz, DMSO-d6): δ 157.0, 155.4, 151.0, 87.5, 86.0, 79.0, 30.1, 29.5, 26.4, 26.1, 26.1, 26.0, 25.5, 17.2.

HRMS (ESI): [m/z] calculated for C₃₈H₆₆N₄O₁₀Na⁺ ([M+Na]⁺): 761.4671; found: 761.4679.

HRMS (ESI): [m/z] calculated for C₃₈H₆₆N₄O₁₀Cl⁻ ([M+Cl]-): 773.4473; found: 773.4492.

### IV. Compounds for coating experiments and adhesion experiments on wood

### Conversion of compounds of formula (I) with polyamines

### Composition #1: HDI-eVC + polyether amine

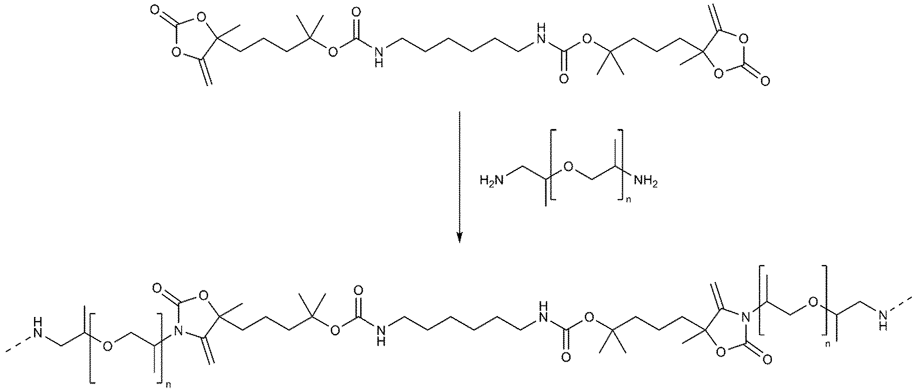

9.6 g of bis(2-methyl-5-(4-methyl-5-methylene-2-oxo-1,3-dioxolan-4-yl)pentan-2-yl)hexane-1,6-diyldi-carbamate (HDI-eVC) and 3.68 g of polyether amine Baxxodur EC301 (poly(propylenglycol)-bis(2-aminopropylether, D230) were mixed in a speedmixer at 2350 rpm for 2 min. 5 g of the mixture were applied as coatings (bar applicator, 500 micrometer). The formulation was cured over night to obtain clear coatings.

### Composition #2: HDI-eVC + polyether amine

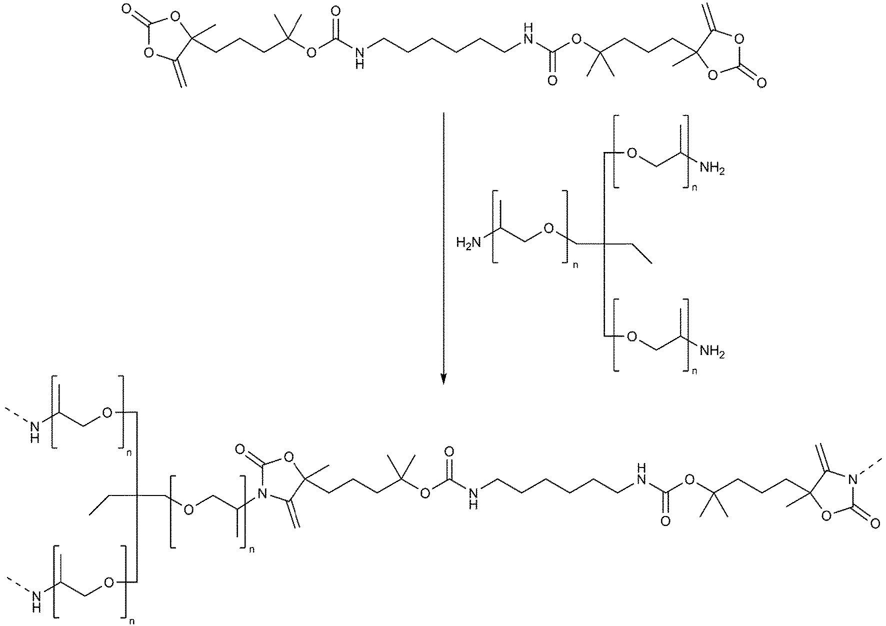

10.2 g of bis(2-methyl-5-(4-methyl-5-methylene-2-oxo-1,3-dioxolan-4-yl)pentan-2-yl)hexane-1,6-diyldi-carbamate (HDI-eVC) and 5 g of polyether amine Baxxodur EC310 (trimethylolpropan-tris[poly(propylenglycol), amino-terminated ether) were mixed in a speedmixer at 2350 rpm for 2 min. 5 g of the mixture were applied as coatings (bar applicator, 500 micrometer). The formulation was cured over night to obtain clear coatings.

### Conversion of compounds of formula (I) with polyols

### Composition #3: HDI-eVC +TMP[EO] MW 170

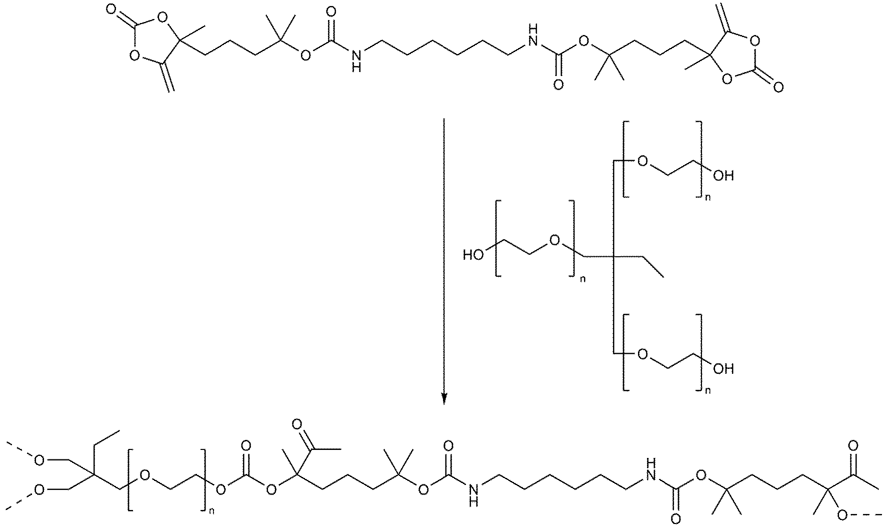

6.6 g of bis(2-methyl-5-(4-methyl-5-methylene-2-oxo-1,3-dioxolan-4-yl)pentan-2-yl)hexane-1,6-diyldi-carbamate (HDI-eVC) and 1.25 g of trimethylolpropaneethoxylat (TMP[EO]) MW 170) were mixed in a speedmixer at 2350 rpm for 5 min until a clear mixture was obtained. To the warm mixture (approx. 40 to 45 °C), two drops of 1,8-diazabicyclo[5.4.0]undec-7-ene (DBU) were added. The mixture was subsequently transferred to the speedmixer for 1 min. 5 g of the mixture were applied as coatings (bar applicator, 500 micrometer). The formulation was cured over night to obtain clear coatings.

### Composition #4: HDI-eVC + TMP[EO] MW 450

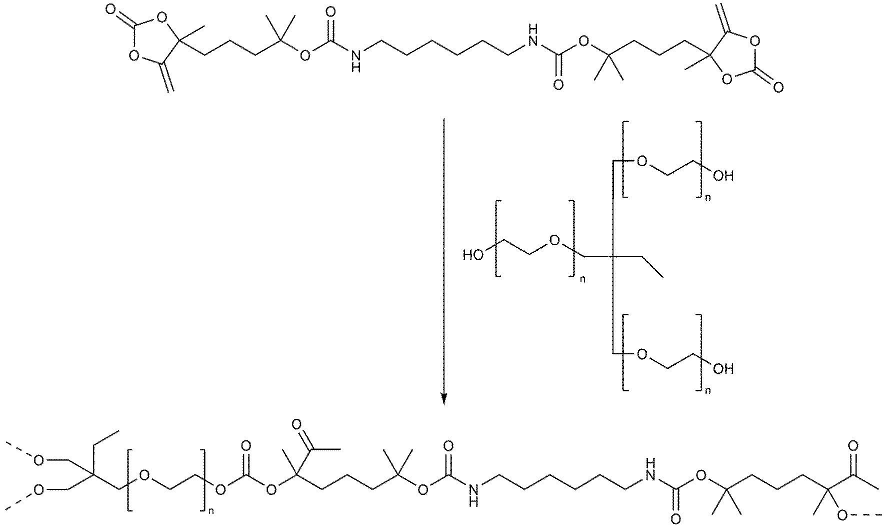

7.5 g of bis(2-methyl-5-(4-methyl-5-methylene-2-oxo-1,3-dioxolan-4-yl)pentan-2-yl)hexane-1,6-diyldi-carbamate (HDI-eVC) and 3.75 g of trimethylolpropaneethoxylat (TMP[EO]) MW 450) were mixed in a speedmixer at 2350 rpm for 5 min until a clear mixture was obtained. To the warm mixture (approx. 40 to 45 °C), two drops of 1,8-diazabicyclo[5.4.0]undec-7-ene (DBU) were added. 5 g of the mixture were applied as coatings at room temperature (bar applicator, 500 micrometer). The formulation was cured over night at room temperature to obtain clear coatings.

### Composition #5: HDI-eVC + hydroxyl functional acrylic polymer

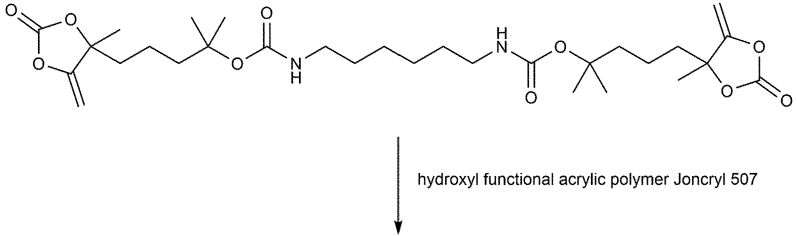

6.6 g of bis(2-methyl-5-(4-methyl-5-methylene-2-oxo-1,3-dioxolan-4-yl)pentan-2-yl)hexane-1,6-diyldi-carbamate (HDI-eVC) and 2.75 g of hydroxyl functional acrylic polymer Joncryl 507 (available from BASF SE) were mixed in a speedmixer at 2350 rpm for 7 min until a clear mixture was obtained. After 1 min at room temperature, 65 mg of 1,8-diazabicyclo[5.4.0]undec-7-ene (DBU) were added to the mixture, followed by mixing in the speedmixer at 2000 rpm for 60 s. The mixture was subjected to an adhesion experiment as described below (see VIII.).

### Composition #6: HDI-eVC-trimer + polyesterpolyol

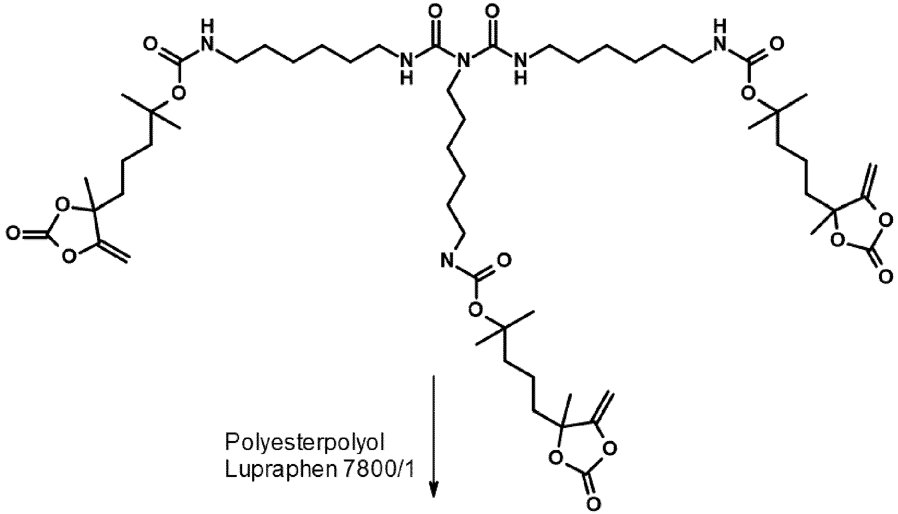

5.1 g of the HDI-eVC-trimer adduct as prepared above and 6.4 g of polyesterpolyol Lupraphen 7800/1 were mixed in a speedmixer at 2350 rpm for 8 min. After addition of 120 mg of 1,8-diazabicyclo[5.4.0]undec-7-ene (DBU), the mixture was mixed in the speedmixer at 2000 rpm for 50 s. The mixture was subjected to an adhesion experiment as described below (see VIII.).

### Conversion of compounds of formula (I) with polythiols

### Composition #7: HDI-eVC + polythiol

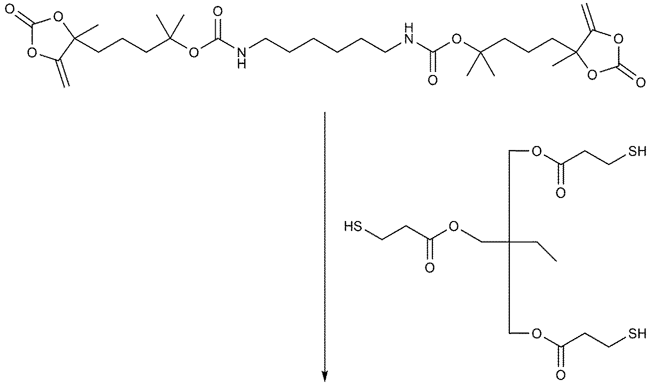

3.6 g of bis(2-methyl-5-(4-methyl-5-methylene-2-oxo-1,3-dioxolan-4-yl)pentan-2-yl)hexane-1,6-diyldi-carbamate (HDI-eVC) and 1.59 g of trimethylolpropane-tris(3-mercaptopropionate) (available from Thiocure BrunoBock) were mixed in a speedmixer at 2350 rpm for 7 min until a clear mixture was obtained. After 2 min, 0.05 g of 1,8-diazabicyclo[5.4.0]undec-7-ene (DBU) were added to the mixture, followed by mixing in the speedmixer for 2000 rpm for 40 s. The mixture was applied for coating and adhesive tests.

Curing kinetics were moderated by application of K54 as base catalyst (replacing DBU). For this purpose, 3.28g of bis(2-methyl-5-(4-methyl-5-methylene-2-oxo-1,3-dioxolan-4-yl)pentan-2-yl)hexane-1,6-diyldicarbamate (HDI-eVC) and 1.45 g of trimethylolpropane-tris(3-mercaptopropionate (available from Thiocure BrunoBock) were mixed in a speedmixer at 2350 rpm for 7 min until a clear mixture was obtained. After 2 min, 0.05 g of K54 were added to the mixture, followed by mixing in the speedmixer at 2000 rpm for 2 min. The mixture was applied for coating and adhesive tests and cured over night.

Curing was carried out at room temperature.

### V. Adhesion Experiments on test specimen made of wood

Compositions #1 to #3 and #5 to #7 were investigated in adhesion experiments.

A test specimen made of wood was provided. The respective composition (also referred to as "mixture") was applied on beech wood test specimen (available from Rocholl GmbH) and bonded and fixed with an overlap of 2.5 cm × 4 cm. The test specimen were cured over night at room temperature. After 12 h, the test specimen were bonded handtight. After 48 h, a tensile shear test according to DIN-EN 1465 with the difference that the results are mean values of three experiments was carried out at 100 mm/min.

The results are presented in the following table:

| Composition | #1 | #2 | #3 | #5 | #6 | #7 |
|---|---|---|---|---|---|---|
| Wood [N/mm²] | 0.56 | 2.18 | 2.34 | 0.72 | 1.12 | 2.70 |
| Wood evaluation | cohesive | cohesive | cohesive | cohesive | cohesive | cohesive |

### VI. Compounds for coating experiments and adhesion experiments on stainless steel

Regarding reaction schemes for compositions #8 to #18, reference is made to compositions #1 to #7 above.

### Conversion of compounds of formula (I) with polyamines

### Composition #8: HDI-eVC + polyether amine

2.72 g of bis(2-methyl-5-(4-methyl-5-methylene-2-oxo-1,3-dioxolan-4-yl)pentan-2-yl)hexane-1,6-diyldi-carbamate (HDI-eVC) and 1.1 g of polyether amine Baxxodur EC301 (poly(propylenglycol)-bis(2-aminopropylether, D230) were mixed in a speedmixer at 2350 rpm for 2 min. The mixture was applied on stainless steel test specimen (Rocholl GmbH) and bonded and fixed with an overlap of 2.5 cm × 2.5 cm. These were cured overnight at room temperature. After 12 h, the test specimen were bonded handtight. After 7 d, a tensile shear test was carried out at 100 mm/min.

### Composition #9: HDI-eVC + polyether amine

2.47 g of bis(2-methyl-5-(4-methyl-5-methylene-2-oxo-1,3-dioxolan-4-yl)pentan-2-yl)hexane-1,6-diyldi-carbamate (HDI-eVC) and 0.94 g of polyether amine Baxxodur EC301 (poly(propylenglycol)-bis(2-aminopropylether, D230) were mixed in a speedmixer at 2350 rpm for 2 min. The mixture was applied on stainless steel test specimen (Rocholl GmbH) and bonded and fixed with an overlap of 2.5 cm × 2.5 cm. These were cured overnight at room temperature. After 12 h, the test specimen were bonded handtight. After 7 d, a tensile shear test was carried out at 100 mm/min.

### Composition #10: HDI-eVC + polyether amine

2.59 g of bis(2-methyl-5-(4-methyl-5-methylene-2-oxo-1,3-dioxolan-4-yl)pentan-2-yl)hexane-1,6-diyldi-carbamate (HDI-eVC) and 1.38 g of polyether amine Baxxodur EC310 (trimethylolpropan-tris[poly(propylenglycol), amino-terminated ether) were mixed in a speedmixer at 2350 rpm for 8 min. The mixture was applied on stainless steel test specimen (Rocholl GmbH) and bonded and fixed with an overlap of 2.5 cm × 2.5 cm. These were cured overnight at room temperature. After 12 h, the test specimen were bonded handtight. After 7 d, a tensile shear test was carried out at 100 mm/min.

### Composition #11: HDI-eVC +polyether amine +silane

3.3 g of bis(2-methyl-5-(4-methyl-5-methylene-2-oxo-1,3-dioxolan-4-yl)pentan-2-yl)hexane-1,6-diyldi-carbamate (HDI-eVC) and 1.5 g of polyether amine Baxxodur EC310 (trimethylolpropan-tris[poly(propylenglycol), amino-terminated ether) as well as 0.37 g of 3-aminopropyl-triethoxysilane were mixed in a speedmixer at 2350 rpm for 8 min. The mixture was applied on stainless steel test specimen (Rocholl GmbH) and bonded and fixed with an overlap of 2.5 cm × 2.5 cm. These were cured overnight at room temperature. After 12 h, the test specimen were bonded handtight. After 7 d, a tensile shear test was carried out at 100 mm/min.

### Composition #12: HDI-eVC-trimer + polyether amine

A mixture of 3.2 g of HDI with 4-(4-hydroxy-4-methylpentyl)-4-methyl-5-methylene-1,3-dioxolan-2-one (HDI-eVC-trimer) and 1.3 g of polyether amine Baxxodur EC310 (trimethylolpropan-tris[poly(propylenglycol), amino-terminated ether) were mixed in a speedmixer at 2350 rpm for 20 min. The mixture was applied on stainless steel test specimen (Rocholl GmbH) and bonded and fixed with an overlap of 2.5 cm × 2.5 cm. These were cured overnight at room temperature. After 12 h, the test specimen were bonded handtight. After 7 d, a tensile shear test was carried out at 100 mm/min.

### Composition #13: HDI-eVC-trimer + polyether amine

A mixture of 3.2 g of HDI with 4-(4-hydroxy-4-methylpentyl)-4-methyl-5-methylene-1,3-dioxolan-2-one (HDI-eVC-trimer) and 0.25 g of 4-methyl-5-methylene-4-(4-methylpent-3-en-1-yl)-1,3-dioxolan-2-one were mixed in a speedmixer at 2350 rpm for 12 min. Then, 1.23 g of polyether amine Baxxodur EC310 (trimethylolpropan-tris[poly(propylenglycol), amino-terminated ether) was added to the mixture and subsequently mixed in a speedmixer at 2350 rpm for 15 min. The mixture was applied on stainless steel test specimen (Rocholl GmbH) and bonded and fixed with an overlap of 2.5 cm × 2.5 cm. These were cured overnight at room temperature. After 12 h, the test specimen were bonded handtight. After 7 d, a tensile shear test was carried out at 100 mm/min.

### Conversion of compounds of formula (I) with polyols

### Composition #14: HDI-eVC + hydroxyl functional acrylic polymer

2.6 g of bis(2-methyl-5-(4-methyl-5-methylene-2-oxo-1,3-dioxolan-4-yl)pentan-2-yl)hexane-1,6-diyldi-carbamate (HDI-eVC) and 4.3g of Joncryl (hydroxyl functional acrylic polymer) were mixed in a speedmixer at 2350 rpm for 6 min. The mixture was kept at room temperature for 3 min before adding 0.06 g of DBU. After addition of DBU, the mixture was mixed in a speedmixer at 2350 rpm for 30 sec, applied on stainless steel test specimen (Rocholl GmbH), bonded and fixed with an overlap of 2.5 cm × 2.5 cm. These were cured overnight at room temperature. After 1 h, the test specimen were bonded handtight. After 7 d, a tensile shear test was carried out at 100 mm/min.

### Composition #15: HDI-eVC + TMP[EO] MW 170

2.7 g of bis(2-methyl-5-(4-methyl-5-methylene-2-oxo-1,3-dioxolan-4-yl)pentan-2-yl)hexane-1,6-diyldi-carbamate (HDI-eVC) and 0.51 g of trimethylolpropaneethoxylat (TMP[EO]) MW 170) were mixed in a speedmixer at 2350 rpm for 3 min. Then, 0.06 g of DBU was added to the mixture. After addition of DBU, the mixture was mixed in a speedmixer at 2350 rpm for 40 sec, applied on stainless steel test specimen (Rocholl GmbH), bonded and fixed with an overlap of 2.5 cm × 2.5 cm. These were cured overnight at room temperature. After 3 min, the test specimen were bonded handtight. After 7 d, a tensile shear test was carried out at 100 mm/min.

### Composition #16: HDI-eVC + TMP[EO] MW 170

2.6 g of bis(2-methyl-5-(4-methyl-5-methylene-2-oxo-1,3-dioxolan-4-yl)pentan-2-yl)hexane-1,6-diyldi-carbamate (HDI-eVC) and 0.49 g of trimethylolpropaneethoxylat (TMP[EO]) MW 170) were mixed in a speedmixer at 2350 rpm for 4 min. Then, 0.03 g of DBU was added to the mixture. After addition of DBU, the mixture was mixed in a speedmixer at 2350 rpm for 30 sec, applied on stainless steel test specimen (Rocholl GmbH), bonded and fixed with an overlap of 2.5 cm × 2.5 cm. These were cured overnight at room temperature. After 5 min, the test specimen were bonded handtight. After 7 d, a tensile shear test was carried out at 100 mm/min.

### Composition #17: HDI-eVC + EDTA-tetrol

2.7 g of bis(2-methyl-5-(4-methyl-5-methylene-2-oxo-1,3-dioxolan-4-yl)pentan-2-yl)hexane-1,6-diyldi-carbamate (HDI-eVC) and 0.53 g of N,N,N',N'-tetrakis(2-hydroxyethyl)ethylendiamine (EDTA-tetrol) were mixed in a speedmixer at 2350 rpm for 6 min. Then, 0.06 g of DBU was added to the mixture. After addition of DBU, the mixture was mixed in a speedmixer at 2350 rpm for 30 sec, applied on stainless steel test specimen (Rocholl GmbH), bonded and fixed with an overlap of 2.5 cm × 2.5 cm. These were cured overnight at room temperature. After 4 min, the test specimen were bonded handtight. After 7 d, a tensile shear test was carried out at 100 mm/min.

### Composition #18: HDI-eVC + EDTA-tetrol

2.6 g of bis(2-methyl-5-(4-methyl-5-methylene-2-oxo-1,3-dioxolan-4-yl)pentan-2-yl)hexane-1,6-diyldi-carbamate (HDI-eVC) and 0.51 g of N,N,N',N'-tetrakis(2-hydroxyethyl)ethylendiamine (EDTA-tetrol) were mixed in a speedmixer at 2350 rpm for 6 min. Then, 0.09 g of DBU was added to the mixture. After addition of DBU, the mixture was mixed in a speedmixer at 2350 rpm for 30 sec, applied on stainless steel test specimen (Rocholl GmbH), bonded and fixed with an overlap of 2.5 cm × 2.5 cm. These were cured overnight at room temperature. After 2 min, the test specimen were bonded handtight. After 7 d, a tensile shear test was carried out at 100 mm/min.

### VII. Adhesion Experiments on test specimen made of stainless steel

Compositions #10 to 13, 15, 17 and 18 were investigated in adhesion experiments.

A test specimen made of stainless steel was provided and cleaned with acetone prior to the adhesion experiment. The respective composition (also referred to as "mixture") was applied on the stainless steel test specimen (available from Rocholl GmbH) and bonded and fixed with an overlap of 2.5 cm × 2.5 cm. The layer thickness was controlled by a device with set spacing of the two specimen (adhesive layer thickness 0.25 mm). The test specimen were cured over night at room temperature. After 48 h, a tensile shear test according to DIN-EN 1465 with the difference that the results are mean values of three experiments was carried out at 100 mm/min.

The results are presented in the following table:

| Composition | #10 | #11 | #12 | #13 | #15 | #17 | #18 |
|---|---|---|---|---|---|---|---|
| N/mm² | 2.06 | 2.30 | 5.81 | 4.39 | 1.18 | 9.98 | 6.01 |
| adhesive (A) | A | | A/C | A/C | A/C | A | A/C |
| cohesive (C) failure | | A | | | | | |

### VIII. Coating Experiments

Compositions #2, #3, #11 and #17 were investigated in coating experiments.

The reaction mixture was transferred to coating applications via a doctor blade (60 µm) using steel and aluminum substrates. A homogeneous film could be applied to the substrates.

The cross-cut was determined in accordance with DIN EN ISO 2409 on a Bonder panel. The obtained coatings were first kept at room temperature for 6 d. Thereafter, they were kept at 60 °C for 5 d. The curing was followed by conditioning at 23±2 °C and 50±10% humidity for 1 d. The adhesion of the coating to the panel was judged pursuant to a scale of 0 to 100% with 100% standing for "no detachment of the coating layer observed" and 0 standing for "full detachment".

The results are presented in the following table:

| Composition | #2 | #3 |
|---|---|---|
| Steel | 90 | 95 |
| Aluminum | 85 | 95 |

To evaluate the surface hardness of the respective compositions, the compositions were transferred into a mold to obtain cubes (1 cm³). The cubes were cured at room temperature for 6 d. Thereafter, they were kept at 60 °C for 5 d and subsequently subjected to Shore D hardness test protocol. The measurement of surface hardness was carried out using a BAQ Shoredigital (SDA-1348 and SDD-1143) instrument according to the method described in DIN 7619.

The surface hardness results are presented in the following table:

| Composition | #2 | #3 | #11 | #17 |
|---|---|---|---|---|
| Shore D | 79 | 73 | 64 | 73 |

## Claims

1. A composition useful as coating, sealant or adhesive, comprising a)-(I'), a)-(I) + b), a)-(I') + b) or a)-(I) + a)-(I') + b), wherein a)-(I), a)-(I') and b) are as follows
a) 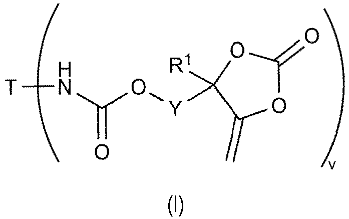 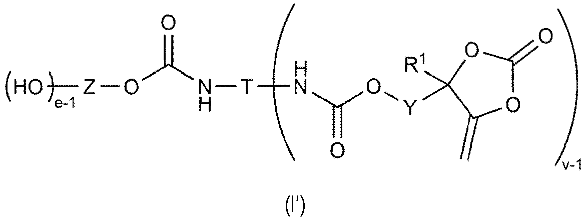 wherein
R¹ is H or methyl,
Y is an organic spacer moiety,
T is a v functional organic residue,
v is from 1.5 to 50,
Z is an e functional residue of a polyol,
b) a compound having at least two nucleophilic groups and/or groups being capable of releasing a nucleophilic group, the nucleophilic group being selected from hydroxyl groups, primary amino groups, secondary amino groups, and thiol groups.

2. The composition of claim 1, wherein Y is 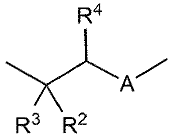 wherein
R² and R³ are independently selected from H, C₁-C₄ alkyl, cycloalkyl and phenyl-C₁-C₄-alkyl, or
R² and R³, together with the carbon atom to which they are attached, form a C₃-C₆ carbocycle,
R⁴ is H or C₁-C₄ alkyl, and
A is C₂-C₇-alkylene.

3. The composition of claim 2, wherein R¹, R² and R³ are methyl, R⁴ is H, and A is -(CH₂)₂.

4. The composition of any one of the preceding claims, wherein T is selected from
(1) Q,
(2) 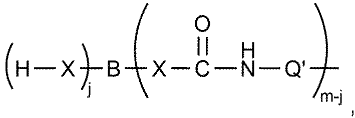 and
(3) 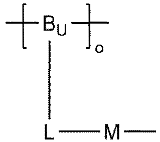 wherein
M is 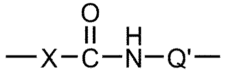
or a chemical bond,
B is an m functional residue of a compound having m isocyanate-reactive groups,
X is O, S or NE, wherein E is H or C₁-C₄ alkyl,
Q is the residue of an n functional polyisocyanate,
Q' is the residue of a diisocyanate,
Bu is a backbone unit within the polymeric backbone,
m is 2 to 50, preferably 2 to 8, more preferably 3 or 4,
j is 0 to m-1,
o is 2 to 50, and
L is a linker.

5. The composition of claim 4, wherein
Q is the residue of an n functional monomeric polyisocyanate which is preferably selected from
- pentamethylenediisocyanate (PDI),
- hexamethylenedisocyanate (HDI),
- dicyclohexylmethane-4,4'-diisocyanate (H12MDI),
- isophorone diisocyanate (IPDI),
- dimeryl diisocyanate (DDI),
- toluene diisocyanate (TDI),
- 4,4'-methylene diphenyl diisocyanate (MDI),
- naphthalene diisocyanate (NDI),
- m-xylylenediisocyanate (XDI),
- oligomeric MDI (also referred to as "polymeric MDI" (PMDI)),
- polyisocyanates having uretdione groups,
- polyisocyanates having isocyanurate groups,
- polyisocyanates having biuret groups,
- polyisocyanates having urethane groups or allophanate groups,
- polyisocyanates comprising oxadiazinetrione groups,
- uretonimine-modified polyisocyanates,
- carbodiimide-modified polyisocyanates,
- polyurethane-polyisocyanate prepolymers or polyurea-polyisocyanate prepolymers,
and
Q' is the residue of a diisocyanate which is preferably selected from
- pentamethylenediisocyanate (PDI),
- hexamethylenedisocyanate (HDI),
- dicyclohexylmethane-4,4'-diisocyanate (H12MDI),
- isophorone diisocyanate (IPDI),
- dimeryl diisocyanate (DDI),
- toluene diisocyanate (TDI),
- 4,4'-methylene diphenyl diisocyanate (MDI),
- naphthalene diisocyanate (NDI).

6. The composition of claim 4 or 5, wherein B is an m functional residue of a compound selected from polyols, polyamines, alkanolamines, and polythiols.

7. The composition of any one of the preceding claims, wherein the compound having at least two nucleophilic groups b) is selected from polyamines such as polyetheramines; polyols such as alkoxylation products of alkanepolyols or acrylic polyols; polyesterpolyols; and polythiols.

8. The composition of any one of the preceding claims, additionally comprising a reactive diluent comprising a 4-methylene-1,3-dioxolan-2-one group.

9. The composition of claim 8, wherein the reactive diluent is of formula (II) 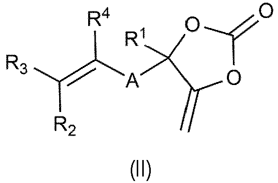 wherein
R¹ is H or methyl,
R² and R³ are independently selected from H, C₁-C₄ alkyl, cycloalkyl and phenyl-C₁-C₄-alkyl, or
R² and R³, together with the carbon atom to which they are attached, form a C₃-C₆ carbocycle,
R⁴ is H or C₁-C₄ alkyl, and
A is C₂-C₇-alkylene.

10. The composition of any one of claims 1 to 9, which is an adhesive and/or sealing composition.

11. The composition of any one of claims 1 to 9, which is a coating composition.

12. The composition of any one of claims 1 to 9, which is a sizing composition.

13. The composition of any one of claims 1 to 9, which is an additive manufacturing composition.

14. The composition of any one of claims 1 to 9, which is a reactive resin mortar composition.

15. A one-part or multiple-part composition useful as coating, sealant, adhesive, reactive resin mortar, for sizing, and/or for additive manufacturing,
comprising a)-(I'), a)-(I), or a)-(I) + a)-(I') in a first part, and comprising b) in the first or a second part, with the proviso that b) is a polyol if comprised in the first part,
wherein a)-(I), a)-(I') and b) are as follows:
a) 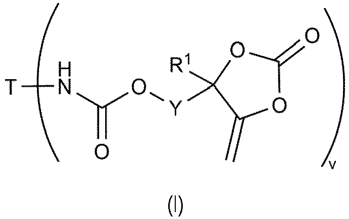 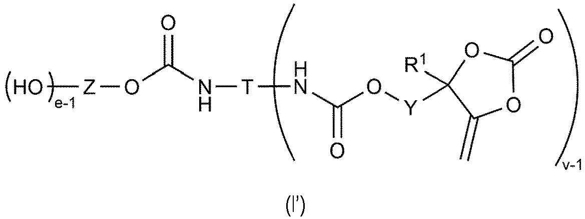 wherein
R¹ is H or methyl,
Y is an organic spacer moiety,
T is a v functional organic residue,
v is from 1.5 to 50,
Z is an e functional residue of a polyol;
b) a compound selected from polyols, polyamines, alkanolamines, and polythiols.

16. A method for bonding a first substrate and at least one further substrate, the method comprising providing a composition of claim 10,
applying the composition to a surface of the first substrate,
contacting the surface to which the composition has been applied of the first substrate with a surface of the at least one further substrate, and
allowing the composition to cure.

17. A method for providing a sealing joint, the method comprising
providing a composition of claim 10,
introducing or applying the composition into a groove, a gap, a channel, a joint or along an edge or a transition, and
allowing the composition to cure.

18. A method for coating a surface of a substrate, the method comprising providing a composition of claim 11,
applying the composition to a surface of the substrate, and
allowing the composition to cure.
